# EUROPEAN PATENT SPECIFICATION

(11) **EP 4 420 898 B1**
(45) Date of publication and mention of the grant of the patent: **20.05.2026**
(21) Application number: 24154478.2
(22) Date of filing: 29.01.2024
(51) Int. Cl.: B60C 11/03, B60C 11/12

(54) **HEAVY DUTY TIRE**
SCHWERLASTREIFEN
PNEU POUR POIDS LOURDS

(30) Priority: 21.02.2023 JP 2023024862
(43) Date of publication of application: 28.08.2024
(73) Proprietor: Sumitomo Rubber Industries, Ltd., Kobe-shi, Hyogo-ken 651-0072 (JP)
(72) Inventor: KAGIMOTO, Shuji, Kobe-shi, 651-0072 (JP)
(74) Representative: Manitz Finsterwald Patent- und Rechtsanwaltspartnerschaft mbB

(56) References cited:
- FR-A1- 3 058 927
- FR-A1- 3 114 271
- JP-A- 2023 013 934
- US-A1- 2022 097 459
- US-B2- 10 377 183

## Description

### BACKGROUND OF THE INVENTION

### Field of the Invention

The present invention relates to a heavy duty tire. Specifically, the present invention relates to a heavy duty tire in which a block pattern is employed as a tread pattern.

### Background Art

In a heavy duty tire in which a block pattern is employed, the ground-contact pressure of a crown portion tends to increase. High ground-contact pressure promotes progress of wear. In this tire, center wear is likely to occur. Various studies have been conducted in order to suppress occurrence of center wear and improve uneven wear resistance (e.g., Japanese Laid-Open Patent Publication No. 2012-201253). Related technology is known from US 10 377 183 B2.

An object of the present invention is to provide a heavy duty tire that can have improved uneven wear resistance and can suppress deterioration in appearance quality and traction performance due to progress of wear.

### SUMMARY OF THE INVENTION

A tire according to the present invention, as set out in the appended claims, is a heavy duty tire including a tread having a tread surface configured to come into contact with a road surface. The tread has a plurality of circumferential grooves continuously extending in a circumferential direction. The plurality of circumferential grooves divide the tread into a plurality of land portions aligned in an axial direction. The plurality of land portions include a plurality of main land portions each located between the adjacent circumferential grooves. Each of the main land portions has a plurality of main lateral grooves connecting the adjacent circumferential grooves. The plurality of main lateral grooves divide the main land portion into a plurality of main blocks aligned in the circumferential direction. Each of the main lateral grooves formed on the main land portion is located at a portion where the adjacent circumferential grooves are close to each other. Each of the main lateral grooves includes a lateral groove body and a bottom sipe portion formed at a bottom of the lateral groove body. The lateral groove body is shallower than the circumferential groove, and the bottom sipe portion has a groove width smaller than a groove width of the lateral groove body. The plurality of main blocks in at least one main land portion each have a transverse sipe traversing the main block. The transverse sipe includes a sipe body and a tubular portion located radially inward of the sipe body. The tubular portion has a groove width larger than a groove width of the sipe body. The circumferential groove located between the adjacent main land portions is a circumferential narrow groove. The main land portion located on each outermost side in the axial direction, among the plurality of main land portions, is an outer main land portion. The circumferential groove located axially outward of the outer main land portion is a circumferential wide groove having a groove width larger than a groove width of the circumferential narrow groove. The circumferential narrow groove includes a body portion and an enlarged width portion located radially inward of the body portion. The enlarged width portion has a groove width larger than a groove width of the body portion.

The present invention can provide a tire that can have improved uneven wear resistance and can suppress deterioration in appearance quality and traction performance due to progress of wear.

### BRIEF DESCRIPTION OF THE DRAWINGS

FIG. 1 is a cross-sectional view showing a part of a heavy duty tire according to one embodiment of the present invention;
FIG. 2 is a development view showing a part of a tread of the tire in FIG. 1;
FIG. 3 is a development view showing a part of FIG. 2;
FIG. 4 is a development view showing a part of FIG. 2;
FIG. 5 is a development view showing a part of FIG. 2;
FIG. 6 is a cross-sectional view taken along a line VI-VI in FIG. 3;
FIG. 7 is a cross-sectional view taken along a line VII-VII in FIG. 4;
FIG. 8 is a cross-sectional view taken along a line VIII-VIII in FIG. 3;
FIG. 9 is a cross-sectional view showing a modification of a transverse sipe in FIG. 8;
FIG. 10 is a cross-sectional view taken along a line X-X in FIG. 3;
FIG. 11 is a cross-sectional view taken along a line XI-XI in FIG. 2;
FIG. 12 is a transfer diagram of a tread surface of the tire that is new;
FIG. 13 is a transfer diagram of the tread surface in an intermediate stage of wear;
FIG. 14 is a transfer diagram of the tread surface in an end stage of wear; and
FIG. 15 is a perspective view showing a part of a wall surface of the transverse sipe.

### DETAILED DESCRIPTION

The tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion.

### [Findings on Which Present Invention Is Based]

According to thorough studies by the present inventor, the following circumstances have become clear regarding a tire in which a block pattern is employed as a tread pattern.

In a tire in which a block pattern is employed, the ground-contact pressure of a crown portion tends to increase. In this tire, center wear is likely to occur.

If the stiffness of each block is increased by, for example, making lateral grooves between the blocks shallower, the tire can suppress occurrence of center wear. The tire can have improved uneven wear resistance.

However, if the lateral grooves are made shallower, there is a concern that the lateral grooves may disappear early, resulting in deterioration in appearance quality. There is also a concern that the edge effect of each lateral groove may be lost, resulting in deterioration in traction performance.

Therefore, in order to establish a technology capable of improving uneven wear resistance and suppressing deterioration in appearance quality and traction performance due to progress of wear, the present inventor has conducted a thorough study for a block pattern of a tire, and has completed the invention described below.

### [Outline of Embodiments of Present Invention]

### [Configuration 1]

A tire according to an aspect of the present invention is a heavy duty tire including a tread having a tread surface configured to come into contact with a road surface, wherein the tread has a plurality of circumferential grooves continuously extending in a circumferential direction, the plurality of circumferential grooves divide the tread into a plurality of land portions aligned in an axial direction, the plurality of land portions include a plurality of main land portions each located between the adjacent circumferential grooves, each of the main land portions has a plurality of main lateral grooves connecting the adjacent circumferential grooves, the plurality of main lateral grooves divide the main land portion into a plurality of main blocks aligned in the circumferential direction, each of the main lateral grooves formed on the main land portion is located at a portion where the adjacent circumferential grooves are close to each other, each of the main lateral grooves includes a lateral groove body and a bottom sipe portion formed at a bottom of the lateral groove body, the lateral groove body is shallower than the circumferential groove, the bottom sipe portion has a groove width smaller than a groove width of the lateral groove body, the plurality of main blocks in at least one main land portion each have a transverse sipe traversing the main block, the transverse sipe includes a sipe body and a tubular portion located radially inward of the sipe body, the tubular portion has a groove width larger than a groove width of the sipe body, the circumferential groove located between the adjacent main land portions is a circumferential narrow groove, the main land portion located on each outermost side in the axial direction, among the plurality of main land portions, is an outer main land portion, the circumferential groove located axially outward of the outer main land portion is a circumferential wide groove having a groove width larger than a groove width of the circumferential narrow groove, the circumferential narrow groove includes a body portion and an enlarged width portion located radially inward of the body portion, and the enlarged width portion has a groove width larger than a groove width of the body portion.

By forming the tire as described above, the shallower lateral groove body increases the stiffness of a crown portion. The circumferential narrow groove suppresses deformation of the crown portion. The sipe body of the transverse sipe reduces specific strain generated in the main block. The tire can reduce the ground-contact pressure of the crown portion. Occurrence of center wear is suppressed. The tire can have improved uneven wear resistance.

Since the lateral groove body is shallower, the lateral groove body disappears relatively early due to wear of the tread. Therefore, there is a concern about deterioration in appearance quality and deterioration in traction performance.

In the tire, however, each main lateral groove includes the bottom sipe portion on the radially inner side of the shallower lateral groove body. The transverse sipe includes the tubular portion on the radially inner side of the sipe body. The circumferential narrow groove includes the enlarged width portion on the radially inner side of the body portion.

In the tire, even when the lateral groove body of the main lateral groove disappears, the bottom sipe portion of the main lateral groove is exposed. Even when the sipe body of the transverse sipe disappears, the tubular portion of the transverse sipe is exposed. Then, even when the body portion of the circumferential narrow groove disappears, the enlarged width portion of the circumferential narrow groove is exposed.

In a period from a new state to an end state of wear where replacement is required, groove components extending in the axial direction in addition to the circumferential grooves are kept exposed. The tire can maintain good appearance quality and good traction performance.

The tire can have improved uneven wear resistance and can suppress deterioration in appearance quality and traction performance due to progress of wear.

### [Configuration 2]

Preferably, in the tire according to [Configuration 1] described above, an entirety of the tubular portion of the transverse sipe is located radially inward of the bottom of the lateral groove body.

### [Configuration 3]

Preferably, in the tire according to [Configuration 1] or [Configuration 2] described above, the circumferential narrow groove includes first proximal portions closer to a first end of the tread surface and second proximal portions closer to a second end of the tread surface, the first proximal portions and the second proximal portions are arranged alternately in the circumferential direction, and when, of the adjacent circumferential narrow grooves, the circumferential narrow groove on the first end side of the tread surface is defined as a first circumferential narrow groove, and the circumferential narrow groove on the second end side of the tread surface is defined as a second circumferential narrow groove, the main lateral grooves extend between the second proximal portions of the first circumferential narrow groove and the first proximal portions of the second circumferential narrow groove.

### [Configuration 4]

Preferably, in the tire according to any one of [Configuration 1] to [Configuration 3] described above, in the outer main land portion, the main lateral grooves are tilted relative to the axial direction, and an axially inner end of each of the main lateral grooves comes into contact with the road surface earlier than an axially outer end thereof.

### [Configuration 5]

Preferably, in the tire according to any one of [Configuration 1] to [Configuration 4] described above, the sipe body extends in a zigzag manner in a length direction thereof and extends in a zigzag manner in a depth direction thereof.

### [Configuration 6]

Preferably, in the tire according to any one of [Configuration 1] to [Configuration 5] described above, the circumferential narrow groove includes a narrow groove body including the body portion, and an entirety of the bottom sipe portion of the main lateral groove is located radially inward of the narrow groove body of the circumferential narrow groove.

### [Configuration 7]

Preferably, in the tire according to any one of [Configuration 1] to [Configuration 6] described above, a ratio (MH/HM) of a groove depth MH of the lateral groove body of the main lateral groove to a groove depth HM of the circumferential narrow groove is not less than 30% and not greater than 60%.

### [Configuration 8]

Preferably, in the tire according to any one of [Configuration 1] to [Configuration 7] described above, a ratio (DC/HM) of a groove depth DC of the sipe body of the transverse sipe to the groove depth HM of the circumferential narrow groove is not less than 60% and not greater than 80%.

### [Details of Embodiments of Present Invention]

Hereinafter, the present invention will be described in detail based on preferred embodiments with appropriate reference to the drawings.

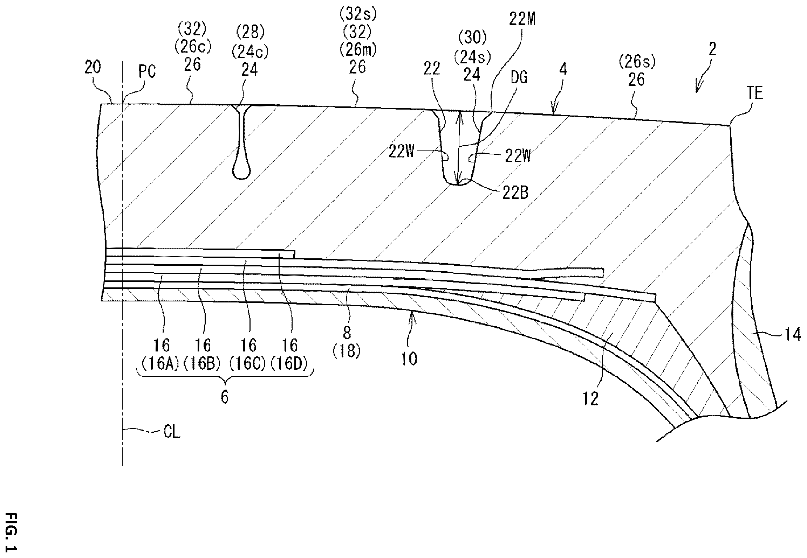

FIG. 1 shows a part of a tire 2 according to one embodiment of the present invention. The tire 2 is mounted to a vehicle such as a truck and a bus. The tire 2 is a heavy duty tire.

FIG. 1 shows a part of a cross-section (hereinafter, referred to as meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL extending in the radial direction in FIG. 1 represents the equator plane of the tire 2.

FIG. 1 shows a part of a tread portion of the tire 2. The tread portion includes a tread 4, a belt 6, a carcass 8, an inner liner 10, a cushion layer 12, and a sidewall 14. Although not shown, the tire 2 includes a pair of cushion layers 12 which are placed so as to be spaced apart from each other in the axial direction with the equator plane CL interposed therebetween. The tire 2 includes a pair of sidewalls 14 which are placed so as to be spaced apart from each other in the axial direction with the equator plane CL interposed therebetween. Although not described in detail, the tire 2 further includes components such as beads and chafers.

The belt 6 is located radially inward of the tread 4. The belt 6 is stacked on the carcass 8.

The belt 6 includes a plurality of belt plies 16 aligned in the radial direction. The belt 6 of the tire 2 includes four belt plies 16. The four belt plies 16 are a first belt ply 16A, a second belt ply 16B, a third belt ply 16 C, and a fourth belt ply 16D. The first belt ply 16A is located on the innermost side in the radial direction. The second belt ply 16B has a largest width, and the fourth belt ply 16D has a smallest width.

Each belt ply 16 includes a large number of belt cords aligned with each other, which are not shown. Each belt cord is titled relative to the equator plane CL. A steel cord is used as each belt cord of the tire 2.

The carcass 8 is located inward of the tread 4 and the sidewall 14. Although not shown, the carcass 8 extends on and between a pair of beads.

The carcass 8 includes at least one carcass ply 18. The carcass 8 of the tire 2 is composed of one carcass ply 18. Although not shown, the carcass ply 18 is turned up at each bead.

The carcass ply 18 includes a large number of carcass cords aligned with each other, which are not shown. These carcass cords intersect the equator plane CL. The carcass 8 of the tire 2 has a radial structure. The carcass cords of the tire 2 are steel cords. A cord formed from an organic fiber may be used as each carcass cord. Examples of the organic fiber include nylon fibers, rayon fibers, polyester fibers, and aramid fibers.

The inner liner 10 is located inward of the carcass 8. The inner liner 10 forms an inner surface of the tire 2. The inner liner 10 is formed from a crosslinked rubber that has an excellent air blocking property. The inner liner 10 maintains the internal pressure of the tire 2.

The cushion layer 12 is located between the belt 6 and the carcass 8 at an end of the belt 6. The cushion layer 12 is formed from a flexible crosslinked rubber.

Each sidewall 14 is connected to an end of the tread 4. The sidewall 14 is located radially inward of the tread 4. The sidewall 14 is located axially outward of the carcass 8. The sidewall 14 is formed from a crosslinked rubber. The sidewall 14 forms a side surface of the tire 2.

The tread 4 is located on the radially outer side in the tire 2 and extends in the circumferential direction. The outer circumferential surface of the tread 4 is a tread surface 20. The tire 2 comes into contact with a road surface at the tread surface 20. The tread 4 has the tread surface 20 which comes into contact with a road surface.

Grooves 22 are formed on the tread 4. Accordingly, a tread pattern is formed.

The groove width of each groove 22 is represented as the distance between a first wall surface 22W and a second wall surface 22W, which are a pair of wall surfaces 22W of the groove 22, that is, an inter-wall surface distance. The groove width at a groove opening 22M of the groove 22 is represented as the shortest distance between a pair of edges forming the groove opening 22M. In the case where a portion of the groove 22 at the groove opening 22M is processed in a tapered manner, the groove width at the groove opening 22M of the groove 22 is represented on the basis of virtual edges obtained on the assumption that the portion of the groove 22 is not processed in a tapered manner. The groove depth of the groove 22 is represented as the shortest distance from a line segment connecting the left and right edges to a bottom 22B of the groove 22.

The tread 4 is formed from a crosslinked rubber. Although not shown, the tread 4 includes a base portion formed from a crosslinked rubber for which low heat generation properties are taken into consideration, and a cap portion formed from a crosslinked rubber for which grip performance and wear resistance are taken into consideration. The cap portion includes the tread surface 20 and covers the entire base portion. The internal structure of the tread 4 has a general structure as the internal structure of the tread of a heavy-duty tire.

In FIG. 1, a position indicated by reference character PC is an equator. The equator PC is the point of intersection of the tread surface 20 and the equator plane CL. In the case where the groove 22 is located on the equator plane CL, the equator PC is specified on the basis of a virtual outer surface obtained on the assumption that the groove 22 is not provided thereon.

A position indicated by reference character TE is an end of the tread surface 20. In the tire, when the end of the tread surface cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is used as the end of the tread surface.

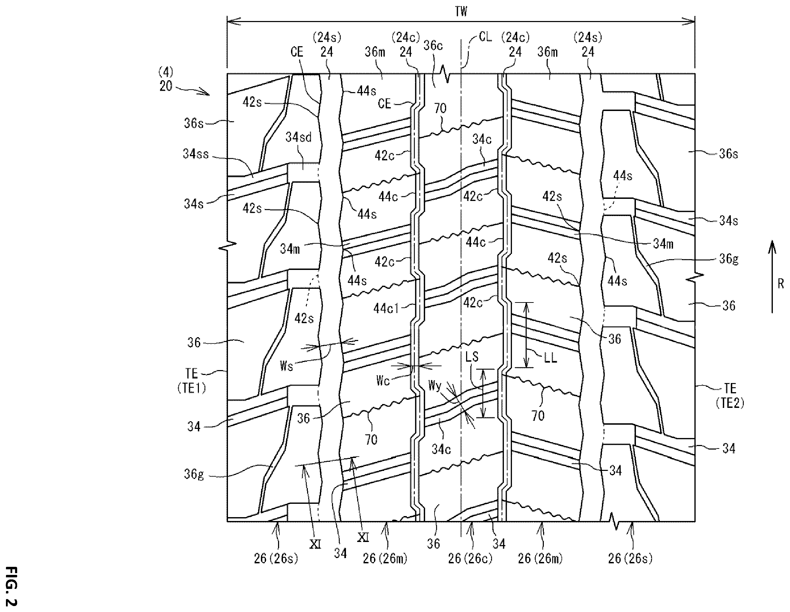

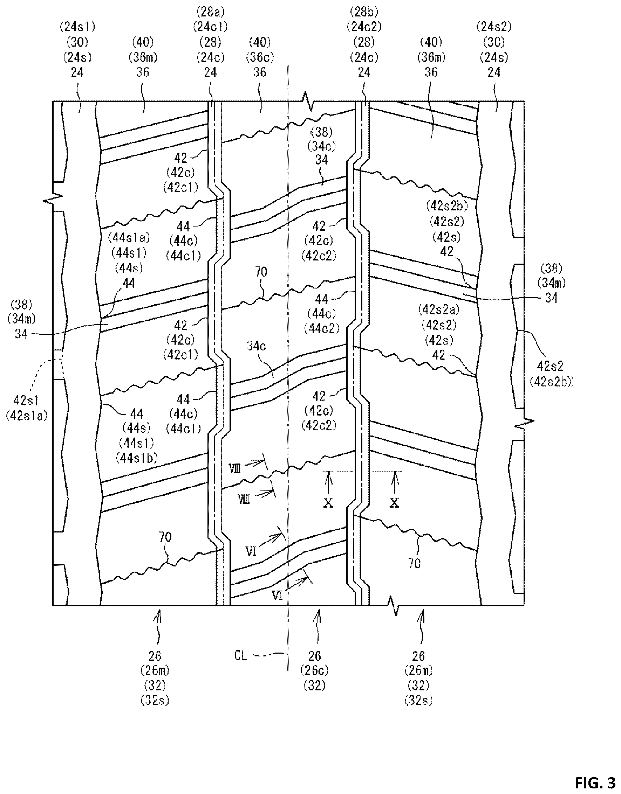

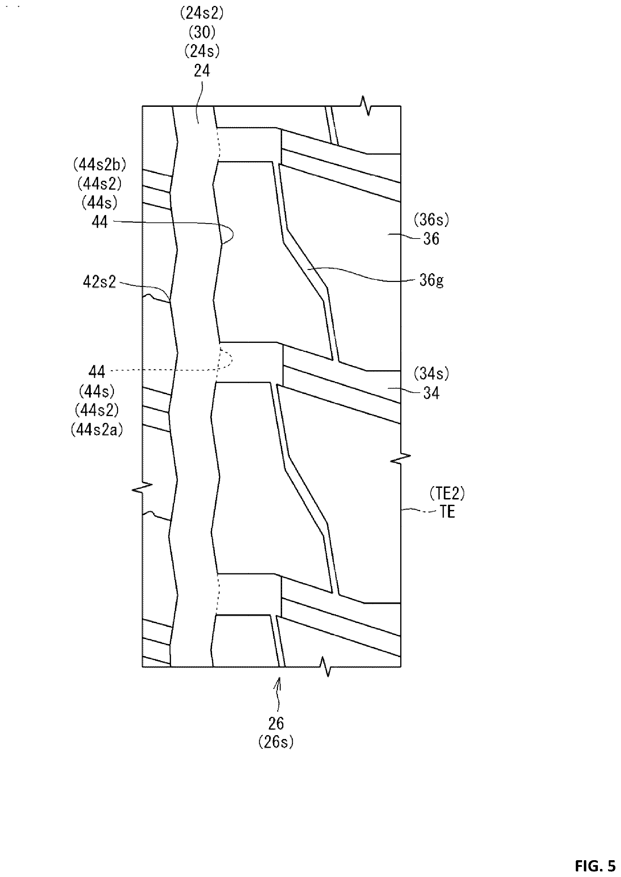

FIG. 2 is a development view of the tread surface 20. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2. FIGS. 3 to 5 are each an enlarged development view showing a part of FIG. 2.

In FIG. 2, a direction indicated by an arrow R is the rotation direction of the tire 2. The tire 2 running on a road surface comes into contact with the road surface from the upper side toward the lower side of the drawing sheet of FIG. 2. The upper side of the drawing sheet of FIG. 2 is the leading edge side of the tire 2, and the lower side of the drawing sheet of FIG. 2 is the trailing edge side of the tire 2.

The tread pattern of the tire 2 will be described with, in the tread surface 20 shown in FIG. 2, an end TE of the tread surface 20 located on the left side of the equator plane CL being defined as a first end TE1, and an end TE of the tread surface 20 located on the right side of the equator plane CL being defined as a second end TE2.

The tread pattern of the tire 2 designates the rotation direction of the tire 2.

In FIG. 2, a length indicated by reference character TW is the width of the tread surface 20. The width TW of the tread surface 20 is the distance in the axial direction from the first end TE1 to the second end TE2. The width TW of the tread surface 20 is represented as a length measured along the tread surface 20.

FIGS. 2 to 5 show the tread pattern of the tire 2. On the tread 4 of the tire 2, a circumferential groove 24 is formed so as to continuously extend in the circumferential direction. On the tread 4, a plurality of circumferential grooves 24 are formed, thereby forming a plurality of land portions 26 aligned in the axial direction. In other words, the tread 4 has a plurality of circumferential grooves 24. The plurality of circumferential grooves 24 divide the tread 4 into a plurality of land portions 26.

In FIG. 1, a length indicated by a double-headed arrow DG is the groove depth of the circumferential groove 24 (specifically, a shoulder circumferential groove described later). The groove depth of the circumferential groove 24 is, for example, not less than 10 mm and not greater than 21 mm. From the viewpoint that the tire 2 can exhibit good wet performance, the groove depth is preferably not less than 13 mm and not greater than 18 mm.

In the present invention, among the plurality of circumferential grooves formed on the tread, the circumferential groove located on each outermost side in the axial direction is also referred to as shoulder circumferential groove. The circumferential groove located on the equator plane is also referred to as center circumferential groove. In the case where no circumferential groove is provided on the equator plane, the circumferential groove closest to the equator plane is also referred to as center circumferential groove. In the case where a circumferential groove is located between the center circumferential groove and the shoulder circumferential groove, this circumferential groove is also referred to as middle circumferential groove.

The tread 4 shown in FIG. 2 has four circumferential grooves 24 aligned in the axial direction. Among the four circumferential grooves 24, the circumferential groove 24 located on each outermost side in the axial direction is a shoulder circumferential groove 24s. Each circumferential groove 24 close to the equator plane CL is a center circumferential groove 24c.

In FIG. 2, a length indicated by a double-headed arrow Wc is the groove width at the groove opening of the center circumferential groove 24c. A length indicated by a double-headed arrow Ws is the groove width at the groove opening of the shoulder circumferential groove 24s.

The ratio (Wc/TW) of the groove width Wc of the center circumferential groove 24c to the width TW of the tread surface 20 is not greater than 2.0%. As shown in FIG. 2, the groove width Ws of the shoulder circumferential groove 24s is larger than the groove width Wc of the center circumferential groove 24c. The ratio (Ws/TW) of the groove width Ws of the shoulder circumferential groove 24s to the width TW of the tread surface 20 is greater than 2.0%. Specifically, the ratio (Ws/TW) is preferably not less than 4.0% and not greater than 10%.

In the present invention, a circumferential groove having, at a groove opening thereof, a groove width of not greater than 2.0% of the width of the tread surface is also referred to as circumferential narrow groove. A circumferential groove having, at a groove opening thereof, a groove width of greater than 2.0% of the width of the tread surface is also referred to as circumferential wide groove.

As described above, the center circumferential groove 24c has a groove width Wc of not greater than 2.0% of the width TW of the tread surface 20. The center circumferential groove 24c is a circumferential narrow groove 28. The shoulder circumferential groove 24s has a groove width Ws of greater than 2.0% of the width TW of the tread surface 20. The shoulder circumferential groove 24s is a circumferential wide groove 30.

The four circumferential grooves 24 formed on the tread 4 include a pair of circumferential narrow grooves 28 and a pair of circumferential wide grooves 30. Each circumferential wide groove 30 has a groove width larger than that of each circumferential narrow groove 28.

In the present invention, a groove having, at a groove opening thereof, a groove width of less than 1.0 mm is also referred to as sipe. The circumferential narrow groove has, at a groove opening thereof, a groove width of not less than 1.0 mm.

Each center circumferential groove 24c is a circumferential narrow groove 28 but is not a sipe. The groove width Wc of the center circumferential groove 24c is not less than 1.0 mm. The groove width Wc is preferably not less than 1.5 mm.

In the present invention, among the plurality of land portions formed in the tread, the land portion located on each outermost side in the axial direction is also referred to as shoulder land portion. The land portion located on the equator plane is also referred to as center land portion. In the case where no land portion is provided on the equator plane, the land portion closest to the equator plane is also referred to as center land portion. The land portion located between the center land portion and the shoulder land portion is also referred to as middle land portion.

The tread 4 has five land portions 26 aligned in the axial direction. Among the five land portions 26, the land portion 26 located on each outermost side in the axial direction is a shoulder land portion 26s. The land portion 26 located on the equator plane CL is a center land portion 26c. The land portion 26 located between the center land portion 26c and the shoulder land portion 26s is a middle land portion 26m.

Although not described in detail, the width of each land portion 26 is determined as appropriate according to the specifications of the tire 2.

In the tread 4, the center land portion 26c is located between the two center circumferential grooves 24c. Each middle land portion 26m is located between the center circumferential groove 24c and the shoulder circumferential groove 24s. The center land portion 26c and the middle land portions 26m are each the land portion 26 between the adjacent circumferential grooves 24.

In the present invention, among the plurality of land portions formed in the tread, a land portion between adjacent circumferential grooves is also referred to as main land portion.

In the tread 4, the center land portion 26c and the middle land portions 26m are main land portions 32. The five land portions 26 formed in the tread 4 include three main land portions 32 each located between the adjacent circumferential grooves 24. In the tread 4 of the tire 2, the plurality of land portions 26 are formed so as to be aligned in the axial direction, and the plurality of land portions 26 include a plurality of main land portions 32 each located between the adjacent circumferential grooves 24.

In the present invention, among the plurality of main land portions, the main land portion located on each outermost side in the axial direction is also referred to as outer main land portion. In the tire 2, among the center land portion 26c and the pair of middle land portions 26m which are the main land portions 32, the main land portion 32 located on each outermost side in the axial direction is the middle land portion 26m. The middle land portion 26m is an outer main land portion 32s.

Each shoulder circumferential groove 24s is located axially outward of the middle land portion 26m. As described above, the shoulder circumferential groove 24s is a circumferential wide groove 30. The circumferential groove 24 located axially outward of the outer main land portion 32s is a circumferential wide groove 30 having a groove width larger than that of the circumferential narrow groove 28.

Each shoulder land portion 26s is located axially outward of the shoulder circumferential groove 24s, and includes the end TE of the tread surface 20. The shoulder land portion 26s is located further outward of the shoulder circumferential groove 24s which is located on the outermost side in the axial direction. The shoulder land portion 26s is not a main land portion 32.

In the tire 2, a land portion 26 may be further provided between the shoulder land portion 26s and the middle land portion 26m. In this case, since circumferential grooves 24 are located on both sides of the land portion 26 located between the shoulder land portion 26s and the middle land portion 26m, this land portion 26 is a main land portion 32. A plurality of land portions 26 may be further provided between each shoulder land portion 26s and each middle land portion 26m.

In the tire 2, a plurality of lateral grooves 34 are formed on all the land portions 26 formed in the tread 4 so as to traverse the land portions 26. Accordingly, a plurality of blocks 36 are formed in each land portion 26 so as to be aligned in the circumferential direction. The tread pattern of the tire 2 is a block pattern.

Each lateral groove 34 formed on the center land portion 26c is also referred to as center lateral groove 34c. The center lateral groove 34c connects the center circumferential groove 24c on the first end TE1 side of the tread surface 20 (hereinafter, referred to as first center circumferential groove 24c1) and the center circumferential groove 24c on the second end TE2 side of the tread surface 20 (hereinafter, referred to as second center circumferential groove 24c2).

Each block 36 formed in the center land portion 26c is also referred to as center block 36c. A plurality of center lateral grooves 34c divide the center land portion 26c into a plurality of center blocks 36c.

Each lateral groove 34 formed on each middle land portion 26m is also referred to as middle lateral groove 34m. The middle lateral groove 34m connects the shoulder circumferential groove 24s and the center circumferential groove 24c.

Each block 36 formed in each middle land portion 26m is also referred to as middle block 36m. A plurality of middle lateral grooves 34m divide the middle land portion 26m into a plurality of middle blocks 36m.

Each lateral groove 34 formed on each shoulder land portion 26s is also referred to as shoulder lateral groove 34s. The shoulder lateral groove 34s connects the end TE of the tread surface 20 and the shoulder circumferential groove 24s.

Each block 36 formed in each shoulder land portion 26s is also referred to as shoulder block 36s. A plurality of shoulder lateral grooves 34s divide the shoulder land portion 26s into a plurality of shoulder blocks 36s.

In the present invention, each lateral groove 34 traversing the main land portion 32 is also referred to as main lateral groove 38.

As described above, the center land portion 26c and the middle land portions 26m are main land portions 32. The center lateral grooves 34c formed on the center land portion 26c and the middle lateral grooves 34m formed on the middle land portions 26m are main lateral grooves 38.

A plurality of main land portions 32 are formed in the tread 4, and each main land portion 32 has a plurality of main lateral grooves 38 connecting the adjacent circumferential grooves 24.

In FIG. 2, a length indicated by a double-headed arrow Wy is the groove width at the groove opening of the main lateral groove 38. The groove width Wy of the main lateral groove 38 is not less than 0.55 times and not greater than 0.75 times the groove width Ws of the shoulder circumferential groove 24s. Even when the tire 2 comes into contact with a road surface, a pair of wall surfaces of the main lateral groove 38 do not come into contact with each other.

In the present invention, each block 36 formed by forming the plurality of main lateral grooves 38 on each main land portion 32 is also referred to as main block 40.

The center blocks 36c formed by forming the center lateral grooves 34c on the center land portion 26c, and the middle blocks 36m formed by forming the middle lateral grooves 34m on each middle land portion 26m, are main blocks 40.

The plurality of main lateral grooves 38 formed on each main land portion 32 divide the main land portion 32 into a plurality of main blocks 40 aligned in the circumferential direction.

As described above, each shoulder land portion 26s is not a main land portion 32. The shoulder lateral grooves 34s formed on each shoulder land portion 26s are not main lateral grooves 38. The shoulder blocks 36s formed by forming the shoulder lateral grooves 34s on each shoulder land portion 26s are not main blocks 40.

Each circumferential groove 24 includes first proximal portions 42 closer to the first end TE1 of the tread surface 20, and second proximal portions 44 closer to the second end TE2 of the tread surface 20. The first proximal portions 42 and the second proximal portions 44 are arranged alternately in the circumferential direction. The first proximal portions 42 and the second proximal portions 44 are connected by connection elements CE. The circumferential groove 24 does not extend in a straight manner, but extends in a zigzag manner.

First proximal portions 42c and second proximal portions 44c of each center circumferential groove 24c extend in the circumferential direction. The first proximal portions 42c and the second proximal portions 44c have a constant length in the circumferential direction. On the other hand, first proximal portions 42s and second proximal portions 44s of each shoulder circumferential groove 24s are formed as bending points. In the shoulder circumferential groove 24s, the first proximal portions 42s and the second proximal portions 44s as bending points are connected by connection elements CE.

The first proximal portions 42c and the second proximal portions 44c of each center circumferential groove 24c may be formed as bending points. The first proximal portions 42s and the second proximal portions 44s of each shoulder circumferential groove 24s may be formed so as to have a constant length.

The length in the circumferential direction of each first proximal portion 42c1 of the first center circumferential groove 24c1 is equal to the length in the circumferential direction of each second proximal portion 44c2 of the second center circumferential groove 24c2. Each first proximal portion 42c1 is located on the trailing edge side with respect to the second proximal portion 44c2 close to the first proximal portion 42c1. In the axial direction, the first proximal portion 42c1 and the second proximal portion 44c2 close to the first proximal portion 42c1 partially overlap each other.

The length in the circumferential direction of each second proximal portion 44c1 of the first center circumferential groove 24c1 is equal to the length in the circumferential direction of each first proximal portion 42c2 of the second center circumferential groove 24c2. Each second proximal portion 44c1 is located on the trailing edge side with respect to the first proximal portion 42c2 close to the second proximal portion 44c1. In the axial direction, the second proximal portion 44c1 and the first proximal portion 42c2 close to the second proximal portion 44c1 partially overlap each other.

In the tire 2, each first proximal portion 42c1 of the first center circumferential groove 24c1 and each second proximal portion 44c2 of the second center circumferential groove 24c2, which have the same length in the circumferential direction, are also referred to as long elements of the center circumferential grooves 24c. Each second proximal portion 44c1 of the first center circumferential groove 24c1 and each first proximal portion 42c2 of the second center circumferential groove 24c2, which have the same length in the circumferential direction, are also referred to as short elements of the center circumferential grooves 24c. Each long element is longer than each short element. The length of the long element (length indicated by a double-headed arrow LL in FIG. 2) is preferably not less than 1.1 times and not greater than 1.5 times the length of the short element (length indicated by a double-headed arrow LS in FIG. 2).

Second proximal portions 44s1 of the shoulder circumferential groove 24s on the first end TE1 side of the tread surface 20 (hereinafter, referred to as first shoulder circumferential groove 24s1) include second proximal portions 44s1a each overlapping the first proximal portion 42c1 of the first center circumferential groove 24c1 in the axial direction, and second proximal portions 44s1b each overlapping the second proximal portion 44c1 of the first center circumferential groove 24c1 in the axial direction. The second proximal portions 44s1a and the second proximal portions 44s1b of the first shoulder circumferential groove 24s1 are arranged alternately in the circumferential direction with first proximal portions 42s1 interposed therebetween.

The first proximal portions 42s1 of the first shoulder circumferential groove 24s1 include first proximal portions 42s1a each overlapping the shoulder lateral groove 34s in the axial direction, and first proximal portions 42s1b each overlapping the shoulder block 36s in the axial direction. The first proximal portions 42s1a and the first proximal portions 42s1b of the first shoulder circumferential groove 24s1 are arranged alternately in the circumferential direction with the second proximal portions 44s1 interposed therebetween.

First proximal portions 42s2 of the shoulder circumferential groove 24s on the second end TE2 side of the tread surface 20 (hereinafter, referred to as second shoulder circumferential groove 24s2) include first proximal portions 42s2a each overlapping the first proximal portion 42c2 of the second center circumferential groove 24c2 in the axial direction, and first proximal portions 42s2b each overlapping the second proximal portion 44c2 of the second center circumferential groove 24c2 in the axial direction. The first proximal portions 42s2a and the first proximal portions 42s2b are arranged alternately in the circumferential direction with second proximal portions 44s2 interposed therebetween.

The second proximal portions 44s2 of the second shoulder circumferential groove 24s2 include second proximal portions 44s2a each overlapping the shoulder lateral groove 34s in the axial direction, and second proximal portions 44s2b each overlapping the shoulder block 36s in the axial direction. The second proximal portions 44s2a and the second proximal portions 44s2b are arranged alternately in the circumferential direction with the first proximal portions 42s2 interposed therebetween.

While each center circumferential groove 24c oscillates once, each shoulder circumferential groove 24s oscillates twice. When the tire 2 runs on a wet road surface, water easily flows in each shoulder circumferential groove 24s. The shoulder circumferential groove 24s can contribute to improving running performance on a wet road surface (wet performance).

The distance in the axial direction between the first center circumferential groove 24c1 and the second center circumferential groove 24c2 varies in the circumferential direction. This distance in the axial direction is shorter between the second proximal portions 44c1 of the first center circumferential groove 24c1 and the first proximal portions 42c2 of the second center circumferential groove 24c2, and is longer between the first proximal portions 42c1 of the first center circumferential groove 24c1 and the second proximal portions 44c2 of the second center circumferential groove 24c2.

The distance in the axial direction between the first shoulder circumferential groove 24s1 and the first center circumferential groove 24c1 also varies in the circumferential direction. This distance in the axial direction is shorter between the second proximal portions 44s1a of the first shoulder circumferential groove 24s1 and the first proximal portions 42c1 of the first center circumferential groove 24c1, and is longer between the first proximal portions 42s1a of the first shoulder circumferential groove 24s1 and the second proximal portions 44c1 of the first center circumferential groove 24c1.

The distance in the axial direction between the second center circumferential groove 24c2 and the second shoulder circumferential groove 24s2 also varies in the circumferential direction. This distance in the axial direction is shorter between the second proximal portions 44c2 of the second center circumferential groove 24c2 and the first proximal portions 42s2b of the second shoulder circumferential groove 24s2, and is longer between the first proximal portions 42c2 of the second center circumferential groove 24c2 and the second proximal portions 44s2b of the second shoulder circumferential groove 24s2.

As described above, the distance in the axial direction between the adjacent circumferential grooves 24 varies in the circumferential direction.

Each center lateral groove 34c formed on the center land portion 26c connects the second proximal portion 44c1 of the first center circumferential groove 24c1 and the first proximal portion 42c2 of the second center circumferential groove 24c2 between which the above-described distance in the axial direction is shorter. The center lateral groove 34c is located at a portion where the adjacent circumferential grooves 24 are close to each other.

Each middle lateral groove 34m formed on the middle land portion 26m on the first end TE1 side of the tread surface 20 connects the second proximal portion 44s1a of the first shoulder circumferential groove 24s1 and the first proximal portion 42c1 of the first center circumferential groove 24c1 between which the above-described distance in the axial direction is shorter. Each middle lateral groove 34m on the second end TE2 side also connects the second proximal portion 44c2 of the second center circumferential groove 24c2 and the first proximal portion 42s2b of the second shoulder circumferential groove 24s2 between which the above-described distance in the axial direction is shorter. The middle lateral groove 34m is also located at a portion where the adjacent circumferential grooves 24 are close to each other.

As described above, each center lateral groove 34c and each middle lateral groove 34m are main lateral grooves 38. Each main lateral groove 38 formed on each main land portion 32 is located at a portion where the adjacent circumferential grooves 24 are close to each other.

The distance in the axial direction between each end TE of the tread surface 20 and each shoulder circumferential groove 24s also varies in the circumferential direction.

On the first end TE1 side of the tread surface 20, this distance in the axial direction is shorter at the first proximal portions 42s1 of the first shoulder circumferential groove 24s1, and is longer at the second proximal portions 44s1 of the first shoulder circumferential groove 24s1. Each shoulder lateral groove 34s on the first end TE1 side connects the first end TE1 and the first proximal portion 42s1 (specifically, the above-described first proximal portion 42s1a) between which the above-described distance in the axial direction is shorter.

On the second end TE2 side of the tread surface 20, this distance in the axial direction is shorter at the second proximal portions 44s2 of the second shoulder circumferential groove 24s2, and is longer at the first proximal portions 42s2 of the second shoulder circumferential groove 24s2. Each shoulder lateral groove 34s on the second end TE2 side connects the second proximal portion 44s2 (specifically, the above-described second proximal portion 44s2a) and the second end TE2 between which the above-described distance in the axial direction is shorter.

On each of the first end TE1 side and the second end TE2 of the tread surface 20, each shoulder lateral groove 34s is located at a portion where the shoulder circumferential groove 24s is close to the end TE of the tread surface 20.

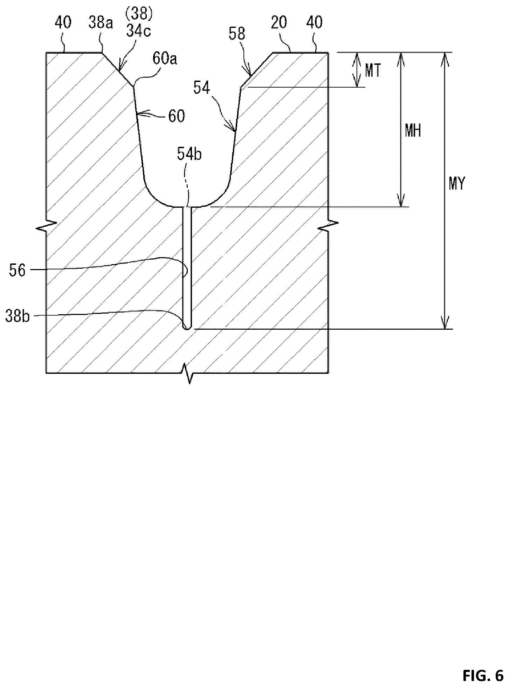

FIG. 6 is a cross-sectional view of the center lateral groove 34c taken along a line VI-VI in FIG. 3. FIG. 6 shows a cross-section of the center lateral groove 34c along a plane perpendicular to the length direction of the center lateral groove 34c.

As described above, each center lateral groove 34c is a main lateral groove 38. FIG. 6 shows a cross-section of the main lateral groove 38. As described above, each middle lateral groove 34m is also a main lateral groove 38. A cross-sectional shape of the middle lateral groove 34m is the same as that of the center lateral groove 34c. The description of the cross-sectional shape of the middle lateral groove 34m is omitted.

Each main lateral groove 38 includes a lateral groove body 54 and a bottom sipe portion 56. The lateral groove body 54 includes a groove opening 38a of the main lateral groove 38. The groove width of the lateral groove body 54 is not less than 1.0 mm. The lateral groove body 54 is not a sipe. The bottom sipe portion 56 includes a bottom 38b of the main lateral groove 38. The groove width of the bottom sipe portion 56 is smaller than the groove width of the lateral groove body 54. Specifically, the groove width of the bottom sipe portion 56 is less than 1.0 mm. The bottom sipe portion 56 is a sipe.

The lateral groove body 54 includes a tapered portion 58 and a body portion 60. The tapered portion 58 includes the above-described groove opening 38a. The tapered portion 58 is tapered inward from the groove opening 38a. The body portion 60 is located radially inward of the tapered portion 58. The body portion 60 is connected to the tapered portion 58. The boundary between the body portion 60 and the tapered portion 58 is a groove opening 60a of the body portion 60. The body portion 60 is tapered inward from the groove opening 60a. The body portion 60 includes a bottom 54b of the lateral groove body 54. The groove width of the body portion 60 is larger than the groove width of the bottom sipe portion 56.

The lateral groove body 54 does not have to be provided with the tapered portion 58. In this case, a cross-sectional shape of the lateral groove body 54 is shaped such that the wall surfaces of the body portion 60 shown in FIG. 6 are caused to spread outward and the position of the point of intersection of an extension line of each wall surface and an extension line of the tread surface 20 is at the groove opening 60a of the body portion 60, that is, the groove opening 38a of the main lateral groove 38.

From the viewpoint that the tire 2 can effectively suppress concentration of strain on the edge of the main block 40 while ensuring the groove volume of the main lateral groove 38, the lateral groove body 54 of the main lateral groove 38 is preferably provided with the tapered portion 58 as shown in FIG. 6.

The bottom sipe portion 56 is located radially inward of the lateral groove body 54. The bottom sipe portion 56 is formed at the bottom 54b of the lateral groove body 54. The bottom sipe portion 56 extends further inward from the bottom 54b of the lateral groove body 54. The bottom sipe portion 56 is shaped by a blade composed of a flat plate. The wall surfaces of the bottom sipe portion 56 are formed as flat surfaces.

In FIG. 6, a length indicated by a double-headed arrow MY is the groove depth of the main lateral groove 38. A length indicated by a double-headed arrow MH is the groove depth of the lateral groove body 54. A length indicated by a double-headed arrow MT is the groove depth of the tapered portion 58.

The groove depth MY of the main lateral groove 38 is slightly shallower than the groove depth DG of the circumferential groove 24. Specifically, the groove depth MY is suitably set in a range of not less than 0.85 times and not greater than 0.95 times the groove depth DG of the circumferential groove 24.

From the viewpoint that the tire 2 can effectively suppress concentration of strain on the edge of the main block 40 while ensuring the groove volume of the main lateral groove 38, the ratio (MT/MY) of the groove depth MT of the tapered portion 58 to the groove depth MY of the main lateral groove 38 is preferably not less than 0.12 and not greater than 0.14.

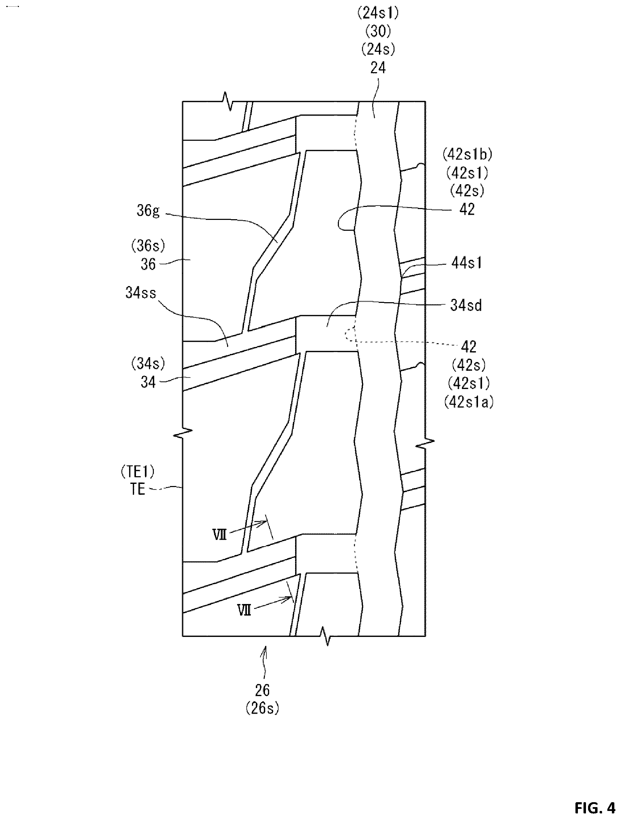

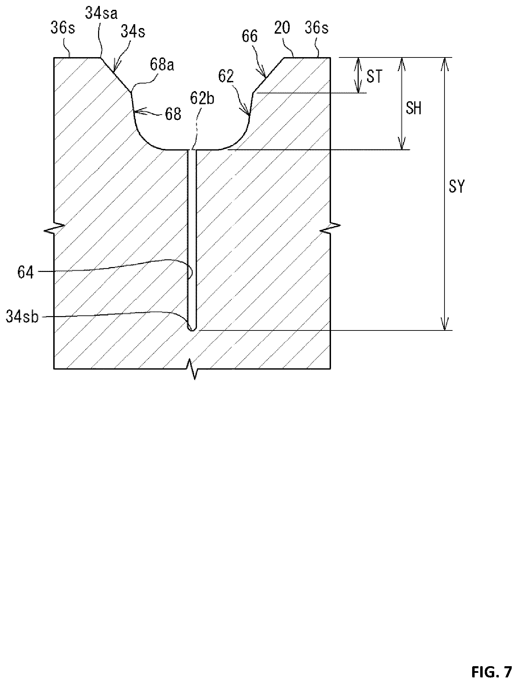

FIG. 7 is a cross-sectional view of the shoulder lateral groove 34s taken along a line VII-VII in FIG. 4. FIG. 7 shows a cross-section of the shoulder lateral groove 34s along a plane perpendicular to the length direction of the shoulder lateral groove 34s. The shoulder lateral groove 34s includes a deep bottom portion 34sd on the shoulder circumferential groove 24s side, and a shallow bottom portion 34ss on the end TE side of the tread surface 20. FIG. 7 shows a cross-sectional shape of the shallow bottom portion 34ss. The deep bottom portion 34sd has the same cross-sectional shape as the cross-sectional shape of the shoulder circumferential groove 24s. The description of the cross-sectional shape of the deep bottom portion 34sd is omitted.

On each shoulder block 36s of the tire 2, a narrow groove 36g is formed so as to connect the deep bottom portion 34sd on the leading edge side and the shallow bottom portion 34ss on the trailing edge side.

The shallow bottom portion 34ss of the shoulder lateral groove 34s includes a lateral groove body 62 and a bottom sipe portion 64. The lateral groove body 62 includes a groove opening 34sa of the shoulder lateral groove 34s. The groove width of the lateral groove body 62 is not less than 1.0 mm. The lateral groove body 62 is not a sipe. The bottom sipe portion 64 includes a bottom 34sb of the shoulder lateral groove 34s. The groove width of the bottom sipe portion 64 is smaller than the groove width of the lateral groove body 62. Specifically, the groove width of the bottom sipe portion 64 is less than 1.0 mm. The bottom sipe portion 64 is a sipe.

The lateral groove body 62 includes a tapered portion 66 and a body portion 68. The tapered portion 66 includes the above-described groove opening 34sa. The tapered portion 66 is tapered inward from the groove opening 34sa. The body portion 68 is located radially inward of the tapered portion 66. The body portion 68 is connected to the tapered portion 66. The boundary between the body portion 68 and the tapered portion 66 is a groove opening 68a of the body portion 68. The body portion 68 is tapered inward from the groove opening 68a. The body portion 68 includes a bottom 62b of the lateral groove body 62. The groove width of the body portion 68 is larger than the groove width of the bottom sipe portion 64.

The lateral groove body 62 does not have to be provided with the tapered portion 66. In this case, a cross-sectional shape of the lateral groove body 62 is shaped such that the wall surfaces of the body portion 68 shown in FIG. 7 are caused to spread outward and the position of the point of intersection of an extension line of each wall surface and an extension line of the tread surface 20 is at the groove opening 68a of the body portion 68, that is, the groove opening 34sa of the shoulder lateral groove 34s.

From the viewpoint that the tire 2 can effectively suppress concentration of strain on the edge of the shoulder block 36s while ensuring the groove volume of the shoulder lateral groove 34s, the lateral groove body 62 of the shoulder lateral groove 34s is preferably provided with the tapered portion 66 as shown in FIG. 7.

The bottom sipe portion 64 is located radially inward of the lateral groove body 62. The bottom sipe portion 64 is formed at the bottom 62b of the lateral groove body 62. The bottom sipe portion 64 extends further inward from the bottom 62b of the lateral groove body 62. The bottom sipe portion 64 is shaped by a blade composed of a flat plate. The wall surfaces of the bottom sipe portion 64 are formed as flat surfaces.

In FIG. 7, a length indicated by a double-headed arrow SY is the groove depth of the shoulder lateral groove 34s. A length indicated by a double-headed arrow SH is the groove depth of the lateral groove body 62. A length indicated by a double-headed arrow ST is the groove depth of the tapered portion 66.

In the tire 2, the groove depth SY of the shoulder lateral groove 34s is substantially equal to the groove depth MY of the main lateral groove 38. Specifically, the ratio (SY/MY) of the groove depth SY of the shoulder lateral groove 34s to the groove depth MY of the main lateral groove 38 is not less than 0.95 and not greater than 1.05.

The ratio (ST/SY) of the groove depth ST of the tapered portion 66 to the groove depth SY of the shoulder lateral groove 34s is also substantially equal to the ratio (MT/MY). Specifically, from the viewpoint that the tire 2 can effectively suppress concentration of strain on the edge of the shoulder block 36s while ensuring the groove volume of the shoulder lateral groove 34s, the ratio (ST/SY) is preferably not less than 0.12 and not greater than 0.14.

From the viewpoint of ensuring the stiffness of the shoulder land portion 26s, the lateral groove body 62 of the shoulder lateral groove 34s is preferably shallower than the lateral groove body 54 of the main lateral groove 38. Specifically, the ratio (SH/MH) of the groove depth SH of the lateral groove body 62 of the shoulder lateral groove 34s to the groove depth MH of the lateral groove body 54 of the main lateral groove 38 is preferably not less than 0.50 and not greater than 0.70.

As described above, the center blocks 36c formed by forming the center lateral grooves 34c on the center land portion 26c and the middle blocks 36m formed by forming the middle lateral grooves 34m on each middle land portion 26m are main blocks 40.

On the main blocks 40 of the tire 2, transverse sipes 70 are provided so as to traverse the main blocks 40.

The transverse sipes 70 of the tire 2 are provided on the center blocks 36c of the center land portion 26c and the middle blocks 36m of the middle land portions 26m. A transverse sipe 70 may be provided only on each center block 36c. A transverse sipe 70 may be provided only on each middle block 36m. That is, in the tire 2, in at least one main land portion 32 out of the plurality of main land portions 32, the plurality of main blocks 40 each have a transverse sipe 70.

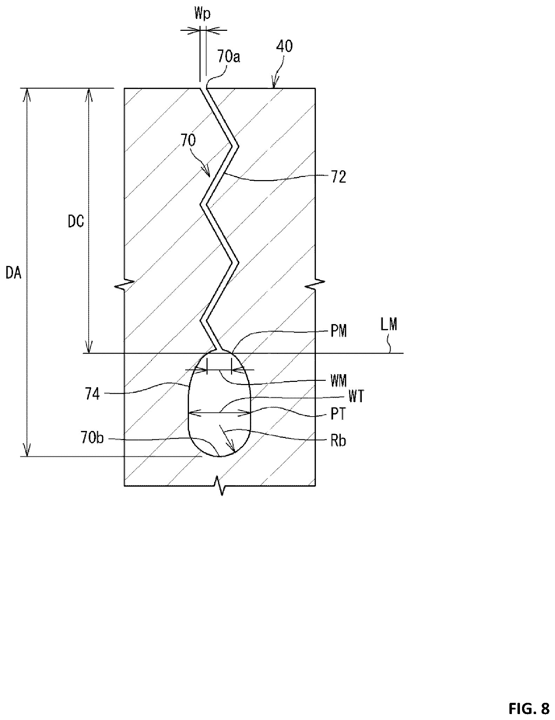

FIG. 8 is a cross-sectional view taken along a line VIII-VIII in FIG. 3. FIG. 8 shows a cross-section of the transverse sipe 70. FIG. 8 shows a cross-section of the transverse sipe 70 along a plane perpendicular to the length direction of the transverse sipe 70.

FIG. 8 shows a cross-section of the transverse sipe 70 provided on the center block 36c. As described above, the transverse sipe 70 is also provided on each middle block 36m. A cross-sectional shape of the transverse sipe 70 on each middle block 36m is the same as that of the transverse sipe 70 on each center block 36c. The description of the cross-sectional shape of the transverse sipe 70 on each middle block 36m is omitted.

The transverse sipe 70 includes a sipe body 72 and a tubular portion 74. The sipe body 72 includes a groove opening 70a of the transverse sipe 70. The tubular portion 74 includes a bottom 70b of the transverse sipe 70.

As shown in FIG. 2, the sipe body 72 extends in a zigzag manner in the length direction of the transverse sipe 70. Although not shown, the sipe body 72 may extend in a straight manner in the length direction.

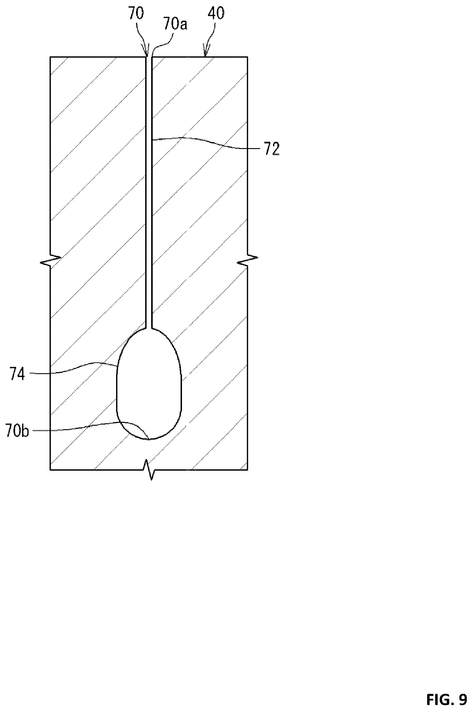

As shown in FIG. 8, the sipe body 72 extends in a zigzag manner in the depth direction of the transverse sipe 70. The sipe body 72 may extend in a straight manner as shown in FIG. 9.

The tubular portion 74 is located radially inward of the sipe body 72. The tubular portion 74 extends in the length direction of the transverse sipe 70.

In FIG. 8, a solid line LM is a boundary line between the sipe body 72 and the tubular portion 74. A length indicated by a double-headed arrow WM is the groove width of the transverse sipe 70 measured along the boundary line LM. The boundary line LM is set at a position at which the groove width WM is 1.0 mm.

The transverse sipe 70 has a groove width Wp of less than 1.0 mm at the groove opening 70a thereof. The groove width of a portion outside the boundary line LM, that is, the sipe body 72, is less than 1.0 mm. The sipe body 72 is a sipe. The groove width of a portion inside the boundary line LM, that is, the tubular portion 74, is not less than 1.0 mm. The groove width of the tubular portion 74 is larger than the groove width of the sipe body 72.

The tubular portion 74 extends inward from the position of the boundary line LM. In FIG. 8, a length indicated by a double-headed arrow WT is the maximum groove width of the tubular portion 74. In FIG. 8, a position indicated by reference character PT is the position at which the tubular portion 74 has the maximum groove width WT. The tubular portion 74 is tapered outward from a portion where the tubular portion 74 has the maximum groove width WT. The tubular portion 74 is tapered inward from the portion where the tubular portion 74 has the maximum groove width WT.

A cross-sectional shape of the tubular portion 74 may be circular or elliptical. This cross-sectional shape may be a shape in which the portion where the tubular portion 74 has the maximum groove width WT is represented by a straight line and the sipe body 72 side and the bottom 70b side of the straight line portion are represented by arcs (hereinafter, this shape is also referred to as track shape).

In FIG. 8, a length indicated by a double-headed arrow DA is the groove depth of the transverse sipe 70. A length indicated by a double-headed arrow DC is the groove depth of the sipe body 72.

In the tire 2, the groove depth DA of the transverse sipe 70 is substantially equal to the groove depth DG of the circumferential groove 24. Specifically, the groove depth DA of the transverse sipe 70 is not less than 0.95 times and not greater than 1.05 times the groove depth DG of the circumferential groove 24.

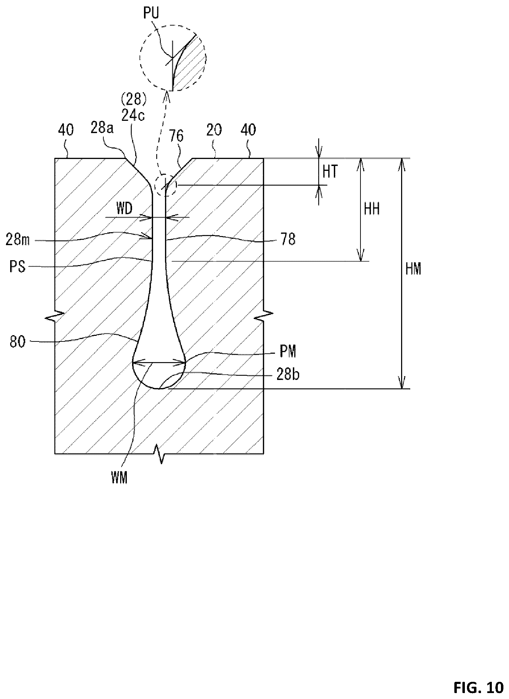

FIG. 10 is a cross-sectional view of the center circumferential groove 24c taken along a line X-X in FIG. 3. FIG. 10 shows a cross-section of the center circumferential groove 24c along a plane perpendicular to the length direction of the center circumferential groove 24c.

As described above, each center circumferential groove 24c is a circumferential narrow groove 28. FIG. 10 shows a cross-section of the circumferential narrow groove 28.

The circumferential narrow groove 28 includes a tapered portion 76, a body portion 78, and an enlarged width portion 80.

The tapered portion 76 includes a groove opening 28a of the circumferential narrow groove 28. The tapered portion 76 is tapered inward from the groove opening 28a. A contour of each wall surface of the tapered portion 76 shown in FIG. 10 is represented by a straight line. This contour may be represented by a curve.

The body portion 78 is located radially inward of the tapered portion 76. The body portion 78 is connected to the tapered portion 76. The body portion 78 extends in a straight manner. A contour of each wall surface of the body portion 78 is represented by a straight line. In FIG. 10, a length indicated by a double-headed arrow WD is the groove width of the body portion 78.

The enlarged width portion 80 is located radially inward of the body portion 78. The enlarged width portion 80 is connected to the body portion 78. The enlarged width portion 80 has a groove width larger than the groove width WD of the body portion 78. The enlarged width portion 80 includes a bottom 28b of the circumferential narrow groove 28.

In FIG. 10, a position indicated by reference character PU is the boundary between the tapered portion 76 and the body portion 78. The boundary PU is represented as the point of intersection of the wall surface contour line of the tapered portion 76 and the wall surface contour line of the body portion 78. As shown in FIG. 10, in the case where the boundary portion between the tapered portion 76 and the body portion 78 is rounded, the boundary PU is represented as the point of intersection of an extension line of the wall surface contour line of the tapered portion 76 and an extension line of the wall surface contour line of the body portion 78.

In FIG. 10, a position indicated by reference character PS is the boundary between the body portion 78 and the enlarged width portion 80. As described above, in the cross-section of the circumferential narrow groove 28, each wall surface contour line of the body portion 78 is a straight line. In the present invention, the position at which a wall surface contour line of the enlarged width portion 80 converges with the wall surface contour line of the body portion 78 is the boundary PS between the body portion 78 and the enlarged width portion 80. Specifically, the position at which the groove width from the body portion 78 to the enlarged width portion 80 is 1.1 times the groove width WD of the body portion 78 is represented as the boundary PS between the body portion 78 and the enlarged width portion 80.

In FIG. 10, a length indicated by a double-headed arrow WM is the maximum groove width of the enlarged width portion 80. In FIG. 10, a position indicated by reference character PM is the position at which the enlarged width portion 80 has the maximum groove width WM.

The enlarged width portion 80 is tapered outward from a portion where the enlarged width portion 80 has the maximum groove width WM. In the portion from the maximum groove width position PM to the boundary PS, the enlarged width portion 80 is curved so as to be recessed inward from the outer side thereof.

The enlarged width portion 80 is tapered inward from the portion where the enlarged width portion 80 has the maximum groove width WM. In the portion from the maximum groove width position PM to the bottom 28b, the enlarged width portion 80 has a rounded contour. In this portion, the enlarged width portion 80 is curved so as to bulge outward from the inner side thereof.

In the enlarged width portion 80, the boundary between the portion curved so as to be recessed inward from the outer side thereof and the portion curved so as to bulge outward from the inner side thereof is located radially outward of the maximum groove width position PM.

The circumferential narrow groove 28 does not have to be provided with the tapered portion 76. In this case, a cross-sectional shape of the circumferential narrow groove 28 is shaped such that the wall surfaces of the body portion 78 shown in FIG. 10 are caused to spread outward and the position of the point of intersection of an extension line of each wall surface and an extension line of the tread surface 20 is at the groove opening of the body portion 78, that is, the groove opening 28a of the circumferential narrow groove 28.

From the viewpoint that the tire 2 can effectively suppress concentration of strain on the edge of the main block 40 while ensuring the groove volume of the circumferential narrow groove 28, the circumferential narrow groove 28 is preferably provided with the tapered portion 76 as shown in FIG. 10.

In FIG. 10, a length indicated by a double-headed arrow HM is the groove depth of the circumferential narrow groove 28. The groove depth HM is equal to the above-described groove depth DG of the circumferential groove 24. A length indicated by a double-headed arrow HH is the groove depth of a portion composed of the tapered portion 76 and the body portion 78. A length indicated by a double-headed arrow HT is the groove depth of the tapered portion 76. The portion composed of the tapered portion 76 and the body portion 78 is also referred to as narrow groove body 28m.

From the viewpoint that the tire 2 can effectively suppress concentration of strain on the edge of the main block 40 while ensuring the groove volume of the circumferential narrow groove 28, the ratio (HT/HM) of the groove depth HT of the tapered portion 76 to the groove depth HM of the circumferential narrow groove 28 is preferably not less than 0.12 and not greater than 0.14.

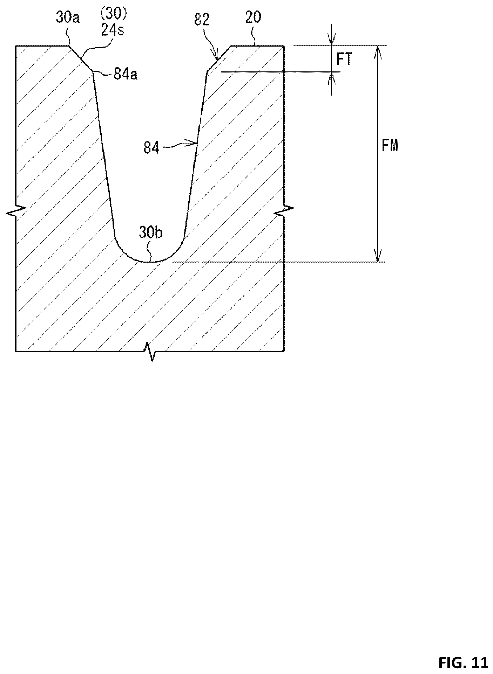

FIG. 11 is a cross-sectional view of the shoulder circumferential groove 24s taken along a line XI-XI in FIG. 2. FIG. 11 shows a cross-section of the shoulder circumferential groove 24s along a plane perpendicular to the length direction of the shoulder circumferential groove 24s.

As described above, each shoulder circumferential groove 24s is a circumferential wide groove 30. FIG. 11 shows a cross-section of the circumferential wide groove 30.

The circumferential wide groove 30 includes a tapered portion 82 and a body portion 84. The tapered portion 82 includes a groove opening 30a of the circumferential wide groove 30. The tapered portion 82 is tapered inward from the groove opening 30a. The body portion 84 is located radially inward of the tapered portion 82. The body portion 84 is connected to the tapered portion 82. The boundary between the body portion 84 and the tapered portion 82 is a groove opening 84a of the body portion 84. The body portion 84 is tapered inward from the groove opening 84a. The body portion 84 includes a bottom 30b of the circumferential wide groove 30.

A pair of wall surfaces of the circumferential wide groove 30 do not come into contact with each other even when the tire 2 comes into contact with a road surface and the tread 4 becomes deformed.

The circumferential wide groove 30 does not have to be provided with the tapered portion 82. In this case, a cross-sectional shape of the circumferential wide groove 30 is shaped such that the wall surfaces of the body portion 84 shown in FIG. 11 are caused to spread outward and the position of the point of intersection of an extension line of each wall surface and an extension line of the tread surface 20 is at the groove opening 84a of the body portion 84, that is, the groove opening 30a of the circumferential wide groove 30.

From the viewpoint that the tire 2 can effectively suppress concentration of strain on the edge of the main block 40 or the shoulder block 36s while ensuring the groove volume of the circumferential wide groove 30, the circumferential wide groove 30 is preferably provided with the tapered portion 82 as shown in FIG. 11.

In FIG. 11, a length indicated by a double-headed arrow FM is the groove depth of the circumferential wide groove 30. The groove depth FM is equal to the groove depth DG of the above-described circumferential groove 24. A length indicated by a double-headed arrow FT is the groove depth of the tapered portion 82.

From the viewpoint that the tire 2 can effectively suppress concentration of strain on the edge of the main block 40 or the shoulder block 36s while ensuring the groove volume of the circumferential wide groove 30, the ratio (FT/FM) of the groove depth FT of the tapered portion 82 to the groove depth FM of the circumferential wide groove 30 is preferably not less than 0.12 and not greater than 0.14.

### [Effects of Tread Pattern]

The effects achieved by the tread pattern of the present invention will be described below.

As described above, the plurality of land portions 26 are formed in the tread 4 of the tire 2 so as to be aligned in the axial direction. The plurality of land portions 26 include the plurality of main land portions 32. The circumferential grooves 24 are located on both sides of each main land portion 32. As shown in FIG. 2, the plurality of main land portions 32 located between the adjacent circumferential grooves 24 are formed in a crown portion of the tread portion.

Each main land portion 32 has the plurality of main lateral grooves 38 connecting the adjacent circumferential grooves 24. The lateral groove body 54 of each main lateral groove 38 is shallower than the circumferential groove 24. The shallower lateral groove body 54 increases the stiffness of the crown portion.

In the tire 2, each circumferential groove 24 located between the adjacent main land portions 32 is a circumferential narrow groove 28. The distance between the wall surfaces at the body portion 78 of the circumferential narrow groove 28 is short. When the tire 2 comes into contact with a road surface, the tread 4 becomes deformed. If the circumferential narrow groove 28 is formed such that the left and right wall surfaces at the body portion 78 can contact with each other due to this deformation, the adjacent main land portions 32 support each other. In this case, the apparent stiffness of the crown portion is increased, and deformation of the crown portion is further suppressed.

As described above, the plurality of main lateral grooves 38 divide the main land portion 32 into the plurality of main blocks 40 aligned in the circumferential direction. In at least one main land portion 32, the plurality of main blocks 40 each have the transverse sipe 70. The sipe body 72 of the transverse sipe 70 reduces specific strain generated in the main block 40.

The tire 2 can reduce the ground-contact pressure of the crown portion. Occurrence of center wear is suppressed. The tire 2 can have improved uneven wear resistance.

Since the lateral groove body 54 is shallower, the lateral groove body 54 disappears relatively early due to wear of the tread 4. Therefore, there is a concern about deterioration in appearance quality and deterioration in traction performance.

In the tire 2, however, each main lateral groove 38 includes the bottom sipe portion 56 on the radially inner side of the shallower lateral groove body 54. Each transverse sipe 70 includes the tubular portion 74 on the radially inner side of the sipe body 72. Each circumferential narrow groove 28 includes the enlarged width portion 80 on the radially inner side of the body portion 78.

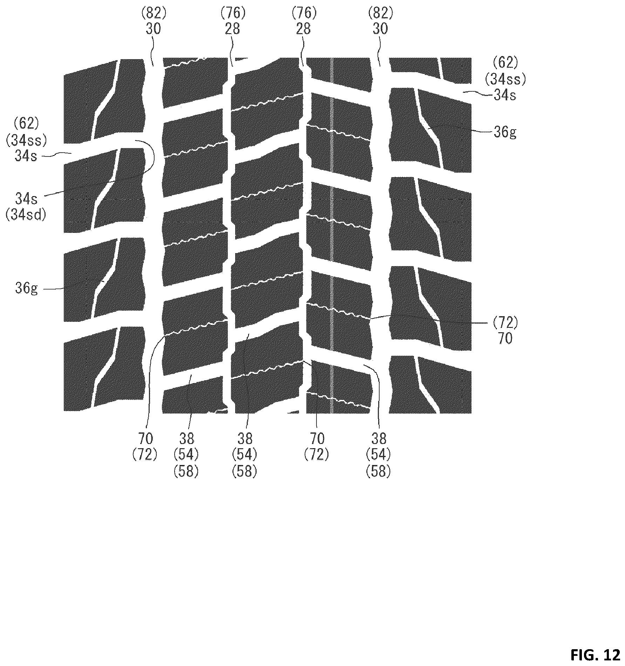

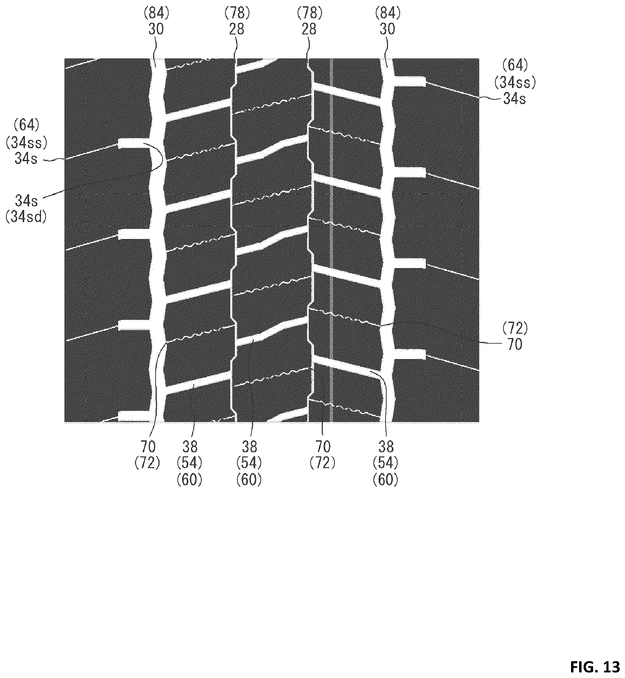

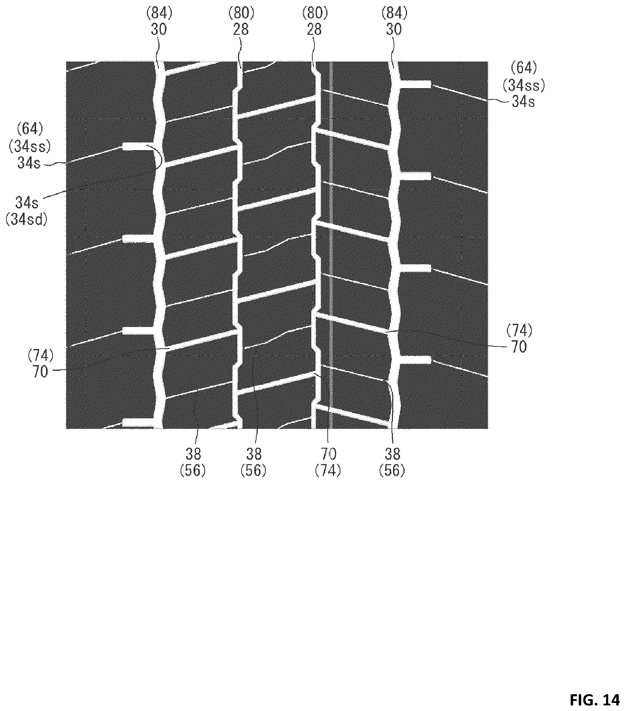

FIGS. 12 to 14 show changes in the tread pattern due to wear of the tread 4. FIG. 12 is a transfer diagram of the tread pattern when the tire 2 is new. FIG. 13 is a transfer diagram of the tread pattern in a state where a medium degree of wear has occurred (hereafter, referred to as intermediate state of wear). FIG. 14 is a transfer diagram of the tread pattern upon reaching a state where replacement of the tire 2 is required when further wear has occurred (hereinafter, referred to as end state of wear).

As is obvious from the comparison between FIG. 12 and FIG. 13, the area of the portion corresponding to the grooves 22 is decreased as a whole. In each main lateral groove 38, the tapered portion 58 of the lateral groove body 54 disappears, exposing the body portion 60. In each transverse sipe 70, the exposed state of the sipe body 72 is maintained. In each circumferential narrow groove 28, the tapered portions 76 disappear, exposing the body portions 78.

Furthermore, the narrow groove 36g of each shoulder block 36s and the lateral groove body 62 of each shallow bottom portion 34ss which forms a part of the shoulder lateral groove 34s disappear, exposing the bottom sipe portion 64 of the shallow bottom portion 34ss.

As is obvious from the comparison between FIG. 13 and FIG. 14, the area of the portion corresponding to the grooves 22 is further decreased as a whole. In each main lateral groove 38, the body portion 60 of the lateral groove body 54, that is, the entirety of the lateral groove body 54, disappears, exposing the bottom sipe portion 56. In each transverse sipe 70, the sipe body 72 disappears, exposing the tubular portion 74. In each circumferential narrow groove 28, the body portion 78 disappears, exposing the enlarged width portion 80.

As described above, in the tire 2, even when the lateral groove body 54 of each main lateral groove 38 disappears, the bottom sipe portion 56 of the main lateral groove 38 is exposed. Even when the sipe body 72 of each transverse sipe 70 disappears, the tubular portion 74 of the transverse sipe 70 is exposed. Then, even when the body portion 78 of each circumferential narrow groove 28 disappears, the enlarged width portion 80 of the circumferential narrow groove 28 is exposed.

In the period from the new state to the end state of wear where replacement is required, the groove components extending in the axial direction in addition to the circumferential grooves 24 are kept exposed. The tire 2 can maintain good appearance quality and good traction performance.

The tire 2 can have improved uneven wear resistance and can suppress deterioration in appearance quality and traction performance due to progress of wear.

### [Preferred Tread Pattern]

A preferred tread pattern will be described in detail below.

In the tire 2, the entirety of the tubular portion 74 of each transverse sipe 70 is preferably located radially inward of the bottom 54b of the lateral groove body 54 of each main lateral groove 38. In other words, the groove depth DC of the sipe body 72 of each transverse sipe 70 is preferably larger than the groove depth MH of the lateral groove body 54 of each main lateral groove 38. Accordingly, after the lateral groove body 54 of the main lateral groove 38 disappears, the tubular portion 74 of the transverse sipe 70 is exposed. The wear of the tread 4 can be caused to progress while maintaining the stiffness of the main block 40. The tire 2 can suppress occurrence of center wear, and thus can maintain good uneven wear resistance. After the lateral groove body 54 disappears, the bottom sipe portion 56 is exposed in the main lateral groove 38, and the tubular portion 74 is exposed in the transverse sipe 70. The tire 2 can also suppress deterioration in appearance quality and traction performance due to the disappearance of the lateral groove body 54.

The ratio (DC/HM) of the groove depth DC of the sipe body 72 of each transverse sipe 70 to the groove depth HM of each circumferential narrow groove 28 is preferably not less than 60% and not greater than 80%.

When the ratio (DC/HM) is set to be not less than 60%, each tubular portion 74 can be exposed in the tire 2 at an appropriate timing. The tire 2 allows the wear of the tread 4 to progress while maintaining the stiffness of the main block 40. The tire 2 can effectively suppress occurrence of center wear, and thus can maintain good uneven wear resistance. From this viewpoint, the ratio (DC/HM) is more preferably not less than 65%.

When the ratio (DC/HM) is set to be not greater than 80%, the tubular portion 74 can effectively contribute to improving appearance quality and exhibiting traction performance. From this viewpoint, the ratio (DC/HM) is more preferably not greater than 75%.

The ratio (MH/HM) of the groove depth MH of the lateral groove body 54 of each main lateral groove 38 to the groove depth HM of each circumferential narrow groove 28 is preferably not less than 30% and not greater than 60%.

When the ratio (MH/HM) is set to be not less than 30%, each lateral groove body 54 can be caused to disappear in the tire 2 at an appropriate timing. The tire 2 can maintain good appearance quality and traction performance. From this viewpoint, the ratio (MH/HM) is more preferably not less than 35%.

When the ratio (MH/HM) is set to be not greater than 60%, the tire 2 can effectively suppress the influence of the lateral groove body 54 on the stiffness of the main block 40. The tire 2 allows the wear of the tread 4 to progress while maintaining the stiffness of the main block 40. The tire 2 can effectively suppress occurrence of center wear, and thus can maintain good uneven wear resistance. From this viewpoint, the ratio (MH/HM) is more preferably not greater than 55%.

From the viewpoint that the tire 2 can have improved uneven wear resistance and can suppress deterioration in appearance quality and traction performance due to progress of wear, more preferably, the ratio (DC/HM) is not less than 60% and not greater than 80%, and the ratio (MH/HM) is not less than 30% and not greater than 60%.

In the tire 2, the entirety of the bottom sipe portion 56 of each main lateral groove 38 is preferably located radially inward of the narrow groove body 28m of each circumferential narrow groove 28. In other words, the groove depth MH of the lateral groove body 54 of each main lateral groove 38 is preferably larger than the groove depth HH of the narrow groove body 28m of each circumferential narrow groove 28. The groove width of the enlarged width portion 80 of the circumferential narrow groove 28 gradually increases radially inward from the boundary PS between the narrow groove body 28m and the enlarged width portion 80. In the period from when the lateral groove body 54 disappears to when the tubular portion 74 of the transverse sipe 70 is exposed, a time when the bottom sipe portion 56 of the main lateral groove 38 and the sipe body 72 of the transverse sipe 70 coexist, occurs, but occurrence of a rapid change in the stiffness of the main block 40 in this period is suppressed. The tire 2 can maintain good uneven wear resistance. The enlarged width portion 80 can effectively contribute to exhibiting good appearance quality and traction performance.

The ratio (HH/HM) of the groove depth HH of the narrow groove body 28m of each circumferential narrow groove 28 to the groove depth HM of each circumferential narrow groove 28 is preferably not less than 20% and not greater than 50%.

When the ratio (HH/HM) is set to be not less than 20%, the tire 2 can effectively suppress the influence of the enlarged width portion 80 on the stiffness of the main block 40. The tire 2 allows the wear of the tread 4 to progress while maintaining the stiffness of the main block 40. The tire 2 can effectively suppress occurrence of center wear, and thus can maintain good uneven wear resistance. From this viewpoint, the ratio (HH/HM) is more preferably not less than 25%.

When the ratio (HH/HM) is set to be not greater than 50%, the enlarged width portion 80 can effectively contribute to suppressing a rapid change in the stiffness of the main block 40 during the period from when the lateral groove body 54 disappears to when the tubular portion 74 of the transverse sipe 70 is exposed. From this viewpoint, the ratio (HH/HM) is more preferably not greater than 45%.

The body portion 78 of each circumferential narrow groove 28 of the tire 2 has the groove width WD smaller than the groove width Ws at the groove opening of the shoulder circumferential groove 24s. In the circumferential narrow groove 28, when the tire 2 comes into contact with a road surface, the pair of wall surfaces at the body portion 78 thereof come into contact with each other. The main blocks 40 adjacent to each other across the circumferential narrow groove 28 support each other. As described above, each main land portion 32 including the main blocks 40 is formed in the crown portion of the tread portion. Since the adjacent main blocks 40 support each other, the apparent stiffness of the crown portion is increased, and deformation of the crown portion is suppressed. The tire 2 can effectively suppress occurrence of wear at the crown portion. The tire 2 can have improved uneven wear resistance.

From this viewpoint, the ratio (WD/Ws) of the groove width WD of the body portion 78 of each circumferential narrow groove 28 to the groove width Ws of each shoulder circumferential groove 24s is preferably not greater than 0.35 and more preferably not greater than 0.20.

From the viewpoint that the circumferential narrow groove 28 can contribute to drainage and the tire 2 can maintain good wet performance, the ratio (WD/Ws) is preferably not less than 0.01 and more preferably not less than 0.05.

As described above, the enlarged width portion 80 has a groove width larger than the groove width WD of the body portion 78. From the viewpoint of maintaining wet performance, in each circumferential narrow groove 28, the maximum groove width WM of the enlarged width portion 80 is preferably not less than two times and more preferably not less than three times the groove width WD of the body portion 78. The circumferential narrow groove 28 is provided on the crown portion. From the viewpoint that the influence on the stiffness of the crown portion is suppressed and the tire 2 can maintain good uneven wear resistance, the maximum groove width WM of the enlarged width portion 80 is preferably not greater than 8 times and more preferably not greater than 7 times the groove width WD of the body portion 78.

As described above, each center lateral groove 34c formed on the center land portion 26c connects the second proximal portion 44c1 of the first center circumferential groove 24c1 and the first proximal portion 42c2 of the second center circumferential groove 24c2. Each center lateral groove 34c is a main lateral groove 38, and each center circumferential groove 24c is a circumferential narrow groove 28. The main lateral groove 38 extends between the second proximal portion 44c1 of a first circumferential narrow groove 28a and the first proximal portion 42c2 of a second circumferential narrow groove 28b. Accordingly, each main block 40 formed between the first circumferential narrow groove 28a and the second circumferential narrow groove 28b is located between the main lateral groove 38 on the leading edge side and the main lateral groove 38 on the trailing edge side in the circumferential direction, and is located between the first proximal portion 42c1 of the first circumferential narrow groove 28a and the second proximal portion 44c2 of the second circumferential narrow groove 28b, which are long elements, in the axial direction. Moreover, the distance in the axial direction between each first proximal portion 42c1 of the first circumferential narrow groove 28a and each second proximal portion 44c2 of the second circumferential narrow groove 28b may be larger than the distance in the axial direction between each second proximal portion 44c1 of the first circumferential narrow groove 28a and each first proximal portion 42c2 of the second circumferential narrow groove 28b.

Each main block 40 formed between the adjacent circumferential narrow grooves 28 is surrounded by two main lateral grooves each located at a portion where the adjacent circumferential narrow grooves 28 are close to each other, and two long elements as elements of the circumferential narrow grooves 28. The main block 40 has an octagon-like shape. The tire 2 can suppress an increase in ground-contact pressure at the edge of the main block 40. Since occurrence of center wear is suppressed, the tire 2 can have improved uneven wear resistance. From this viewpoint, each main lateral groove 38 located at a portion where the adjacent circumferential groove 24 are close to each other preferably extends between the second proximal portion 44c1 of the first circumferential narrow groove 28a and the first proximal portion 42c2 of the second circumferential narrow groove 28b. In this case, the adjacent circumferential grooves 24 are more preferably the first center circumferential groove 24c1 and the second center circumferential groove 24c2. In this case, the above-described main block 40 having an octagon-like shape is formed in the center land portion 26c.

As shown in FIG. 4, in each outer main land portion 32s, each main lateral groove 38 is tilted relative to the axial direction. The axially inner end of the main lateral groove 38 is located on the leading edge side with respect to the axially outer end thereof. When the tire 2 runs, the axially inner end of the main lateral groove 38 comes into contact with a road surface earlier than the axially outer end thereof. The main lateral groove 38 extends from the axially inner end to the axially outer end thereof. When the tire 2 runs on a wet road surface, the main lateral groove 38 can effectively drain water existing between the tire 2 and the road surface, from a ground-contact surface of the tire 2. The tire 2 can have improved wet performance. From this viewpoint, preferably, in each outer main land portion 32s, each main lateral groove 38 is tilted relative to the axial direction, and the axially inner end of the main lateral groove 38 comes into contact with a road surface earlier than the axially outer end thereof.

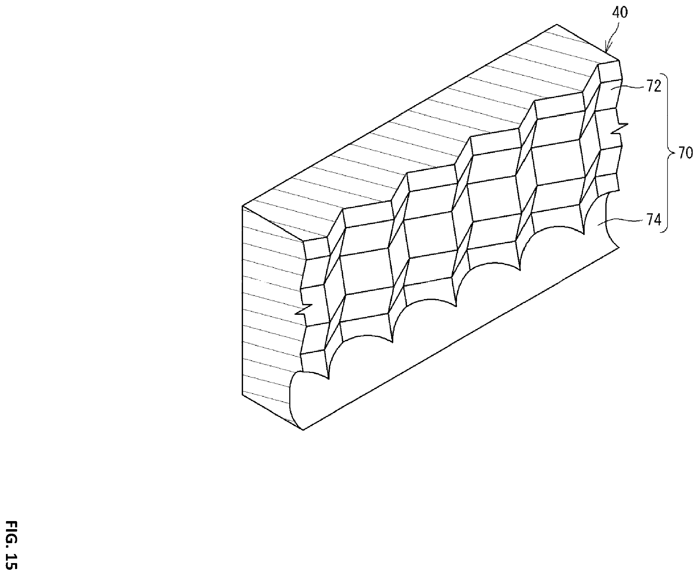

FIG. 15 shows a wall surface of the transverse sipe 70 formed on the main block 40. The sipe body 72 of this transverse sipe 70 extends in a zigzag manner in the length direction thereof and extends in a zigzag manner in the depth direction thereof. A sipe having such a wall surface is also referred to as Miura-fold (three-dimensional) sipe.

In the running tire 2, the wall surfaces of the sipe body 72 come into contact with each other and support each other. The sipe body 72 increases the apparent stiffness of the main block 40. Deformation of the main block 40 is suppressed. The tire 2 can have further improved uneven wear resistance. From this viewpoint, the sipe body 72 of the transverse sipe 70 preferably extends in a zigzag manner in the length direction thereof and extends in a zigzag manner in the depth direction thereof.

As described above, the groove width of the tubular portion 74 is larger than the groove width of the sipe body 72. Specifically, the maximum groove width WT of the tubular portion 74 is preferably not less than 4 times and more preferably not less than 5 times the groove width of the sipe body 72 at the groove opening, that is, the groove width Wp of the transverse sipe 70. Accordingly, the tubular portion 74 can contribute to maintaining wet performance. The maximum groove width WT of the tubular portion 74 is preferably not greater than 13 times and more preferably not greater than 12 times the groove width Wp of the transverse sipe 70. Accordingly, the size of the tubular portion 74 is appropriately maintained. A decrease in the stiffness of the main block 40 is suppressed.

As described above, the tubular portion 74 includes a bottom surface including the bottom 70b of the transverse sipe 70. In the cross-section shown in FIG. 8, a contour of the bottom surface of the tubular portion 74 is represented by an arc passing through the bottom 70b. In FIG. 8, an arrow Rb represents the radius of this arc.

The radius Rb of the arc representing the contour of the bottom surface of the tubular portion 74 is preferably not less than 1.5 mm and not greater than 3.5 mm.

When the radius Rb is set to be not less than 1.5 mm, occurrence of cracking at the bottom 70b is effectively suppressed. From this viewpoint, the radius Rb is more preferably not less than 2.0 mm.

When the radius Rb is set to be not greater than 3.5 mm, a decrease in the stiffness of the main block 40 due to the tubular portion 74 provided in the transverse sipe 70 is suppressed. The stiffness of the main block 40 is appropriately maintained. The tire 2 can have improved uneven wear resistance. From this viewpoint, the radius Rb is more preferably not greater than 3.0 mm.

As is obvious from the above description, according to the present invention, a heavy duty tire that can have improved uneven wear resistance and can suppress deterioration in appearance quality and traction performance due to progress of wear, is obtained.

The above-described technology capable of improving uneven wear resistance and suppressing deterioration in appearance quality and traction performance due to progress of wear can be applied to various tires.

## Claims

1. A heavy duty tire (2) comprising a tread (4) having a tread surface (20) configured to come into contact with a road surface, wherein
the tread (4) has a plurality of circumferential grooves (24) continuously extending in a circumferential direction,
the plurality of circumferential grooves (24) divide the tread (4) into a plurality of land portions (26) aligned in an axial direction,
the plurality of land portions (26) include a plurality of main land portions (32) each located between the adjacent circumferential grooves (24),
each of the main land portions (32) has a plurality of main lateral grooves (38) connecting the adjacent circumferential grooves (24),
the plurality of main lateral grooves (38) divide the main land portion (32) into a plurality of main blocks (40) aligned in the circumferential direction,
each of the main lateral grooves (38) formed on the main land portion (32) is located at a portion where the adjacent circumferential grooves (24) are close to each other,
each of the main lateral grooves (38) includes a lateral groove body (54) and a bottom sipe portion (56) formed at a bottom (54b) of the lateral groove body (54),
the lateral groove body (54) is shallower than the circumferential groove (24),
the bottom sipe portion (56) has a groove width smaller than a groove width of the lateral groove body (54),
the plurality of main blocks (40) in at least one main land portion (32) each have a transverse sipe (70) traversing the main block (40),
the transverse sipe (70) includes a sipe body (72) and a tubular portion (74) located radially inward of the sipe body (72),
the tubular portion (74) has a groove width larger than a groove width of the sipe body (72),
the circumferential groove (24) located between the adjacent main land portions (32) is a circumferential narrow groove (28),
the main land portion (32) located on each outermost side in the axial direction, among the plurality of main land portions (32), is an outer main land portion (32s),
the circumferential groove (24) located axially outward of the outer main land portion (32s) is a circumferential wide groove (30) having a groove width larger than a groove width of the circumferential narrow groove (28),
the circumferential narrow groove (28) includes a body portion (78) and an enlarged width portion (80) located radially inward of the body portion (78), and
the enlarged width portion (80) has a groove width larger than a groove width (WD) of the body portion (78).

2. The heavy duty tire (2) according to claim 1, wherein an entirety of the tubular portion (74) of the transverse sipe (70) is located radially inward of the bottom (54b) of the lateral groove body (54).

3. The heavy duty tire (2) according to claim 1 or 2, wherein
the circumferential narrow groove (28) includes first proximal portions (42) closer to a first end (TE1) of the tread surface (20) and second proximal portions (44) closer to a second end (TE2) of the tread surface (20),
the first proximal portions (42) and the second proximal portions (44) are arranged alternately in the circumferential direction, and
when, of the adjacent circumferential narrow grooves (28), the circumferential narrow groove (28) on the first end (TE1) side of the tread surface (20) is defined as a first circumferential narrow groove (28a), and the circumferential narrow groove (28) on the second end (TE2) side of the tread surface (20) is defined as a second circumferential narrow groove (28b),
the main lateral grooves (38) extend between the second proximal portions (44c1) of the first circumferential narrow groove (28a) and the first proximal portions (42c2) of the second circumferential narrow groove (28b).

4. The heavy duty tire (2) according to any one of claims 1 to 3, wherein, in the outer main land portion (32s), the main lateral grooves (38) are tilted relative to the axial direction, and an axially inner end of each of the main lateral grooves (38) comes into contact with the road surface earlier than an axially outer end thereof.

5. The heavy duty tire (2) according to any one of claims 1 to 4, wherein the sipe body (72) extends in a zigzag manner in a length direction thereof and extends in a zigzag manner in a depth direction thereof.

6. The heavy duty tire (2) according to any one of claims 1 to 5, wherein
the circumferential narrow groove (28) includes a narrow groove body (28m) including the body portion (78), and
an entirety of the bottom sipe portion (56) of the main lateral groove (38) is located radially inward of the narrow groove body (28m) of the circumferential narrow groove (28).

7. The heavy duty tire (2) according to any one of claims 1 to 6, wherein a ratio (MH/HM) of a groove depth MH of the lateral groove body (54) of the main lateral groove (38) to a groove depth HM of the circumferential narrow groove (28) is not less than 30% and not greater than 60%.

8. The heavy duty tire (2) according to any one of claims 1 to 7, wherein a ratio (DC/HM) of a groove depth DC of the sipe body (72) of the transverse sipe (70) to the groove depth HM of the circumferential narrow groove (28) is not less than 60% and not greater than 80%.

## Patentansprüche

1. Schwerlastreifen (2), umfassend eine Lauffläche (4) mit einer Laufflächenoberfläche (20), die dazu konfiguriert ist, mit einer Straßenoberfläche in Kontakt zu kommen, wobei
die Lauffläche (4) eine Vielzahl von Umfangsrillen (24) aufweist, die sich kontinuierlich in einer Umfangsrichtung erstrecken,
die Vielzahl von Umfangsrillen (24) die Lauffläche (4) in eine Vielzahl von Landabschnitten (26) unterteilt, die in einer axialen Richtung ausgerichtet sind,
die Vielzahl von Landabschnitten (26) eine Vielzahl von Hauptlandabschnitten (32) umfasst, die sich jeweils zwischen den benachbarten Umfangsrillen (24) befinden,
jeder der Hauptlandabschnitte (32) eine Vielzahl von Hauptquerrillen (38) aufweist, die die benachbarten Umfangsrillen (24) verbinden,
die Vielzahl von Hauptquerrillen (38) den Hauptlandabschnitt (32) in eine Vielzahl von Hauptblöcken (40) unterteilt, die in der Umfangsrichtung ausgerichtet sind,
jede der Hauptquerrillen (38), die auf dem Hauptlandabschnitt (32) ausgebildet sind, sich an einem Abschnitt befindet, wo die benachbarten Umfangsrillen (24) nahe beieinander sind,
jede der Hauptquerrillen (38) einen Querrillenkörper (54) und einen Bodenfeinschnittabschnitt (56) umfasst, der an einem Boden (54b) des Querrillenkörpers (54) ausgebildet ist,
der Querrillenkörper (54) flacher als die Umfangsrille (24) ist,
der Bodenfeinschnittabschnitt (56) eine Rillenbreite aufweist, die kleiner als eine Rillenbreite des Querrillenkörpers (54) ist,
die Vielzahl von Hauptblöcken (40) in mindestens einem Hauptlandabschnitt (32) jeweils einen Querfeinschnitt (70) aufweisen, der den Hauptblock (40) durchquert,
der Querfeinschnitt (70) einen Feinschnittkörper (72) und einen rohrförmigen Abschnitt (74) umfasst, der sich radial innen von dem Feinschnittkörper (72) befindet,
der rohrförmige Abschnitt (74) eine Rillenbreite aufweist, die größer als eine Rillenbreite des Feinschnittkörpers (72) ist,
die Umfangsrille (24), die sich zwischen den benachbarten Hauptlandabschnitten (32) befindet, eine schmale Umfangsrille (28) ist,
der Hauptlandabschnitt (32), der sich auf jeder äußersten Seite in der axialen Richtung unter der Vielzahl von Hauptlandabschnitten (32) befindet, ein äußerer Hauptlandabschnitt (32s) ist,
die Umfangsrille (24), die sich axial außen von dem äußeren Hauptlandabschnitt (32s) befindet, eine breite Umfangsrille (30) ist, die eine Rillenbreite aufweist, die größer als eine Rillenbreite der schmalen Umfangsrille (28) ist,
die schmale Umfangsrille (28) einen Körperabschnitt (78) und einen Abschnitt (80) mit vergrößerter Breite umfasst, der sich radial innen von dem Körperabschnitt (78) befindet, und
der Abschnitt (80) mit vergrößerter Breite eine Rillenbreite aufweist, die größer als eine Rillenbreite (WD) des Körperabschnitts (78) ist.

2. Schwerlastreifen (2) nach Anspruch 1, wobei sich eine Gesamtheit des rohrförmigen Abschnitts (74) des Querfeinschnitts (70) radial innen von dem Boden (54b) des Querrillenkörpers (54) befindet.

3. Schwerlastreifen (2) nach Anspruch 1 oder 2, wobei
die schmale Umfangsrille (28) erste proximale Abschnitte (42) näher an einem ersten Ende (TE1) der Laufflächenoberfläche (20) und zweite proximale Abschnitte (44) näher an einem zweiten Ende (TE2) der Laufflächenoberfläche (20) umfasst,
die ersten proximalen Abschnitte (42) und die zweiten proximalen Abschnitte (44) abwechselnd in der Umfangsrichtung angeordnet sind, und
wenn von den benachbarten schmalen Umfangsrillen (28) die schmale Umfangsrille (28) auf der Seite des ersten Endes (TE1) der Laufflächenoberfläche (20) als eine erste schmale Umfangsrille (28a) definiert ist und die schmale Umfangsrille (28) auf der Seite des zweiten Endes (TE2) der Laufflächenoberfläche (20) als eine zweite schmale Umfangsrille (28b) definiert ist,
sich die Hauptquerrillen (38) zwischen den zweiten proximalen Abschnitten (44cl) der ersten schmalen Umfangsrille (28a) und den ersten proximalen Abschnitten (42c2) der zweiten schmalen Umfangsrille (28b) erstrecken.

4. Schwerlastreifen (2) nach einem der Ansprüche 1 bis 3, wobei in dem äußeren Hauptlandabschnitt (32s) die Hauptquerrillen (38) relativ zu der axialen Richtung geneigt sind und ein axial inneres Ende jeder der Hauptquerrillen (38) früher als ein axial äußeres Ende davon mit der Straßenoberfläche in Kontakt kommt.

5. Schwerlastreifen (2) nach einem der Ansprüche 1 bis 4, wobei sich der Feinschnittkörper (72) in zickzackartig in einer Längsrichtung davon erstreckt und sich zickzackartig in einer Tiefenrichtung davon erstreckt.

6. Schwerlastreifen (2) nach einem der Ansprüche 1 bis 5, wobei
die schmale Umfangsrille (28) einen schmalen Rillenkörper (28m) umfasst, der den Körperabschnitt (78) umfasst, und
eine Gesamtheit des Bodenfeinschnittabschnitts (56) der Hauptquerrille (38) sich radial innen von dem schmalen Rillenkörper (28m) der schmalen Umfangsrille (28) befindet.

7. Schwerlastreifen (2) nach einem der Ansprüche 1 bis 6, wobei ein Verhältnis (MH/HM) einer Rillentiefe MH des Querrillenkörpers (54) der Hauptquerrille (38) zu einer Rillentiefe HM der schmalen Umfangsrille (28) nicht weniger als 30 % und nicht mehr als 60 % beträgt.

8. Schwerlastreifen (2) nach einem der Ansprüche 1 bis 7, wobei ein Verhältnis (DC/HM) einer Rillentiefe DC des Feinschnittkörpers (72) des Querfeinschnitts (70) zu der Rillentiefe HM der schmalen Umfangsrille (28) nicht weniger als 60 % und nicht mehr als 80 % beträgt.

## Revendications

1. Pneumatique pour service intensif (2) comprenant une bande de roulement (4) ayant une surface de bande de roulement (20) configurée pour venir en contact avec une surface routière, dans lequel la bande de roulement (4) a une pluralité de rainures circonférentielles (24) s'étendant en continu dans une direction circonférentielle,
la pluralité de rainures circonférentielles (24) divisent la bande de roulement (4) en une pluralité de portions en relief (26) alignées dans une direction axiale,
la pluralité de portions en relief (26) incluent une pluralité de portions en relief principales (32) situées chacune entre les rainures circonférentielles (24) adjacentes,
chacune des portions en relief principales (32) a une pluralité de rainures latérales principales (38) connectant les rainures circonférentielles (24) adjacentes,
la pluralité de rainures latérales principales (38) divisent la portion en relief principale (32) en une pluralité de blocs principaux (40) alignés dans la direction circonférentielle,
chacune des rainures latérales principales (38) formées sur la portion en relief principale (32) est située au niveau d'une portion où les rainures circonférentielles (24) adjacentes sont proches les unes des autres,
chacune des rainures latérales principales (38) inclut un corps de rainure latérale (54) et une portion de fente de fond (56) formée au niveau d'un fond (54b) du corps de rainure latérale (54),
le corps de rainure latérale (54) est moins profond que la rainure circonférentielle (24),
la portion de fente de fond (56) a une largeur de rainure inférieure à une largeur de rainure du corps de rainure latérale (54),
la pluralité de blocs principaux (40) dans au moins une portion en relief principale (32) ont chacun une fente transversale (70) traversant le bloc principal (40),
la fente transversale (70) inclut un corps de fente (72) et une portion tubulaire (74) située radialement à l'intérieur du corps de fente (72),
la portion tubulaire (74) a une largeur de rainure supérieure à une largeur de rainure du corps de fente (72),
la rainure circonférentielle (24) située entre les portions en relief principales (32) adjacentes est une rainure étroite circonférentielle (28),
la portion en relief principale (32) située sur chaque côté le plus à l'extérieur dans la direction axiale, parmi la pluralité de portions en relief principales (32), est une portion en relief principale extérieure (32s),
la rainure circonférentielle (24) située axialement à l'extérieur de la portion en relief principale extérieure (32s) est une rainure large circonférentielle (30) ayant une largeur de rainure plus large qu'une largeur de rainure de la rainure étroite circonférentielle (28),
la rainure étroite circonférentielle (28) inclut une portion formant corps (78) et une portion à largeur agrandie (80) située radialement à l'intérieur de la portion formant corps (78), et
la portion à largeur agrandie (80) a une largeur de rainure supérieure à une largeur de rainure (WD) de la portion formant corps (78).

2. Pneumatique pour service intensif (2) selon la revendication 1, dans lequel une entièreté de la portion tubulaire (74) de la fente transversale (70) est située radialement à l'intérieur du fond (54b) du corps de rainure latérale (54).

3. Pneumatique pour service intensif (2) selon la revendication 1 ou 2, dans lequel
la rainure étroite circonférentielle (28) inclut des premières portions proximales (42) plus proches d'une première extrémité (TE1) de la surface de bande de roulement (20) et des secondes portions proximales (44) plus proches d'une seconde extrémité (TE2) de la surface de bande de roulement (20),
les premières portions proximales (42) et les secondes portions proximales (44) sont agencées en alternance dans la direction circonférentielle, et
quand, parmi les rainures étroites circonférentielles (28) adjacentes, la rainure étroite circonférentielle (28) sur le côté de la première extrémité (TE1) de la surface de bande de roulement (20) est définie comme première rainure étroite circonférentielle (28a), et la rainure étroite circonférentielle (28) sur le côté de la seconde extrémité (TE2) de la surface de bande de roulement (20) est définie comme seconde rainure étroite circonférentielle (28b),
les rainures latérales principales (38) s'étendent entre les secondes portions proximales (44c1) de la première rainure étroite circonférentielle (28a) et les premières portions proximales (42c2) de la seconde rainure étroite circonférentielle (28b).

4. Pneumatique pour service intensif (2) selon l'une quelconque des revendications 1 à 3, dans lequel, dans la portion en relief principale extérieure (32s), les rainures latérales principales (38) sont inclinées relativement à la direction axiale, et une extrémité axialement intérieure de chacune des rainures latérales principales (38) vient en contact avec la surface routière plus tôt qu'une extrémité axialement extérieure de celle-ci.

5. Pneumatique pour service intensif (2) selon l'une quelconque des revendications 1 à 4, dans lequel le corps de fente (72) s'étend en zigzag dans une direction de la longueur de celui-ci, et s'étendant en zigzag dans une direction de la profondeur de celui-ci.

6. Pneumatique pour service intensif (2) selon l'une quelconque des revendications 1 à 5, dans lequel
la rainure étroite circonférentielle (28) inclut un corps de rainure étroite (28m) incluant la portion formant corps (78), et
une entièreté de la portion de fente de fond (56) de la rainure latérale principale (38) est située radialement à l'intérieur du corps de rainure étroite (28m) de la rainure étroite circonférentielle (28).

7. Pneumatique pour service intensif (2) selon l'une quelconque des revendications 1 à 6, dans lequel un rapport (MH/HM) d'une profondeur de rainure MH du corps de rainure latérale (54) de la rainure latérale principale (38) sur une profondeur de rainure HM de la rainure étroite circonférentielle (28) n'est pas inférieur à 30 % et n'est pas supérieur à 60 %.

8. Pneumatique pour service intensif (2) selon l'une quelconque des revendications 1 à 7, dans lequel un rapport (DC/HM) d'une profondeur de rainure DC du corps de fente (72) de la rainure transversale (70) sur la profondeur de rainure HM de la rainure étroite circonférentielle (28) n'est pas inférieur à 60 % et n'est pas supérieur à 80 %.
